# EUROPEAN PATENT APPLICATION

(11) **EP 0 948 166 A1**
(43) Date of publication of application: **06.10.1999**
(21) Application number: 98945540.7
(22) Date of filing: 30.09.1998
(51) Int. Cl.: H04L 12/28, G06F 13/00

(54) **METHOD FOR RADIO COMMUNICATION AND DEVICE FOR RADIO COMMUNICATION**

(30) Priority: 30.09.1997 JP 26704497; 30.09.1997 JP 26704597
(71) Applicant: Sony Corporation, Tokyo 141-0001 (JP)
(72) Inventor: UENO, Masatoshi Sony Corporation, Tokyo 141-0001 (JP)
(74) Representative: Pilch, Adam John Michael
(86) International application number: JP9804409
(87) International publication number: WO9917500

(57) **Abstract**

The present invention relates to a radio communication apparatus or the like for transferring data between a plurality of nodes lying within a wireless network. The radio communication apparatus comprises one control node and one or more controlled nodes controlled by the control node. A control block is sent from the control node at the head of each cycle of 125 µsec. Each of the controlled nodes performs a process for referring to the control block and thereby synchronizing its own transfer clock signal with a transfer clock signal of the control node. Further, the control node controls the sending of each node. A plurality of time slots are provided within continuous each cycle. A fixed-length data block is transferred between the respective nodes through the use of a predetermined time slot. The instantaneity of the switching between the sending nodes can be ensured and a data transfer of a high-speed serial bus can be brought into wireless form.

## Description

### TECHNICAL FIELD

This invention relates to a radio communication method and a radio communication apparatus for transferring data between a plurality of nodes lying within a wireless network.

### BACKGROUND ART

With advances in the widespread use of portable devices such as a notebook personal computer, an electronic pocketbook, etc., various analog and digital interfaces have made progress in wireless form and speed-up in recent years. In regard to computer's fields in particular, wireless and speed-up efforts grow prosperous. A construction of a non-contact connection-based network has been put forward between portable devices as well as tabletop devices by using techniques typified by a wireless LAN (local area network) and IrDA (infrared data association).

For example, the wireless LAN makes it possible to provide communications between a plurality of nodes through the use of an access control protocol called "CSMA (carrier sense multiple access)". For example, the IrDA allows communications to be made between two nodes through the use of an access control protocol called "IrLAP (infrared link access protocol)".

However, when such recent high-speed serial buses as typified by a USB (universal serial bus), an IEEE1394, etc., for example, are brought into wireless form, these access techniques cannot be utilized as they are. As already well known, these high-speed serial buses support a transfer system called an isochronous transfer to transfer data of applications placed importance on real time, such as AV (audio-visual) data, etc. This isochronous transfer is a transfer method for assuring a transfer width and time of data thereby to implement a transfer of a predetermined amount of data in a predetermined cycle, which transfer is of importance to the real time of a device.

In order to implement such a transfer method with a wireless network constructed by a plurality of nodes, frequent switching between outgoing or sending nodes is required to insure transfer widths and transfer time intervals of each individual data sent from the plurality of nodes. Therefore, the access control protocol of the above-described IrLAP used in a one-to-one relationship cannot be used as it is. Further, the access control protocol called the above-described CSMA for detecting a state of non-use of a space and thereafter ensuring the corresponding transfer width cannot be used either as it is.

In order to implement wireless form or wirelessing of the isochronous transfer of the high-speed serial bus such as USB, IEEE1394 or the like, the frequent switching between the sending nodes is needed as described above and a network structure is required in which one node takes charge of sending or outgoing control and information management.

Further, these high-speed serial buses respectively have the function of being capable of changing their states with power-on. Since one input/output plug generally bears one connection when nodes are connected to one another with a cable, a change in connection can be recognized based on a change in the electric characteristic of the plug. In the case of a wireless connection, however, there is a high possibility that one input/output device will bear a plurality of connections. Thus, the device encounters difficulties in recognizing each connection change by a change in the electric characteristic.

An object of the present invention is to provide a radio communication method and a radio communication apparatus for ensuring the instantaneity of switching between sending nodes and implementing the above-described isochronous transfer of high-speed serial buses in wireless form.

Another object of the present invention is to provide a radio communication method and a radio communication apparatus wherein one control node can easily perform control on the sending of each node and the settings of a network can be changed while each node is in commission.

### DISCLOSURE OF THE INVENTION

A radio communication method according to this invention is a radio communication method for performing communications within a wireless network comprised of one control node and one or more controlled nodes to be controlled by the control node, comprising a clock synchronizing step for synchronizing a transfer clock signal of controlled node with a transfer clock signal of the control node by using a transfer clock synchronizing signal sent from the control node, and a sending control step for allowing the control node to control the sending of each node so that a fixed-length data block is transferred between the respective nodes through the use of a predetermined time slot of a plurality of time slots respectively provided within continuous respective cycles.

A radio communication apparatus according to this invention is a radio communication apparatus comprising one control node and one or more controlled nodes controlled by the control node and performing communications between the respective nodes by radio, wherein the control node includes synchronizing signal sending means for transmitting a transfer clock synchronizing signal, data sending means for sending data with a fixed-length data block as a unit, data receiving means for receiving the data block, and sending control means for controlling sending of each node so that the data block is transferred between the respective nodes through the use of a predetermined time slot of a plurality of time slots respectively provided within continuous each cycle, and wherein the controlled node includes synchronizing signal receiving means for receiving the transfer clock synchronizing signal, transfer clock synchronizing means for synchronizing a transfer clock signal with a transfer clock signal of the control node through the use of the transfer clock synchronizing signal, data sending means for transmitting data with the fixed-length data block as the unit, and data receiving means for receiving the data block.

A radio communication method according to this invention is a radio communication method for performing communications within a wireless network comprised of one control node and one or more controlled nodes controlled by the control node, comprising a change requiring step for allowing controlled node to make a request to the control node for changing of data indicative of the condition of use of a predetermined node identifier, based on data indicative of the conditions of use of a plurality of node identifiers held in a storage unit of the control node, and a data changing step for allowing the control node to change the data indicative of the condition of use of the predetermined node identifier held in the storage unit according to the data change request issued from each controlled node.

A radio communication apparatus according to this invention is a radio communication apparatus comprising one control node and one or more controlled nodes controlled by the control node and performing communications between the respective nodes by radio, wherein the control node includes a storage unit for holding data indicative of the conditions of use of a plurality of node identifiers, and data changing means for changing data indicative of the condition of use of a predetermined node identifier, which are held in the storage unit, according to a request issued from the controlled node and wherein the controlled node includes change requiring means for making a request to the control node for a change in the data indicative of the condition of use of the predetermined node identifier, based on the data indicative of the conditions of use of the plurality of node identifiers, which are held in the storage unit of the control node.

In the present invention, a control node sends a transfer clock synchronizing signal therefrom. A controlled node refers to the sent transfer clock synchronizing signal. Its own transfer clock signal generated by a PLL circuit, for example, is synchronized with a transfer clock signal from the control node. Further, the sending of each node is controlled by the control node, and a fixed-length data block is transferred between the respective nodes through the use of a predetermined time slot of a plurality of time slots respectively provided within continuous each cycle.

Thus, the synchronization of the transfer clock signal of controlled node with the transfer clock signal of the control node is assured. Therefore, even if each sending node is changed to another, a clock signal synchronizing process becomes unnecessary or simple for each node. Thus, a synchronous delay time interval incident to the selection of the sending node can be greatly shortened and the instantaneity of the switching between the sending nodes can be ensured, whereby an isochronous transfer of a high-speed serial bus can be brought into wireless form.

Each node transfers a fixed-length data block in a time slot at which its sending is permitted by the control node. Therefore, a transfer width of data sent from each node is managed with the fixed-length data block as a unit. Thus, even when one node is transferring continuous data, the permission of sending is changed to another node thereby to make it easy to offer a transfer width of data to the node.

Since the transfer width of the data sent from each node is managed with the fixed-length data block as the unit, the switching of each sending node to another occurs only between time slots. Thus, the management of the transfer width at each node by the control node and the sending-node switching process are simplified.

In the present invention, data indicative of the conditions of use of a plurality of node identifiers are held in a storage unit of a control node. For example, controlled node that attempts to enter into a wireless network, makes a request to the control node for changing of data indicative of the condition of use of non-used node identifier to a used state. In response to it, the control node sets the data indicative of the condition of use of the node identifier so as to permit the data to indicate the used state. Thus, the corresponding controlled node can enter the above node identifier into the wireless network as its own node identifier.

For example, a controlled node which attempts to separate from the wireless network, makes a request to the control node for changing of data indicative of the condition of use of its own node identifier to a non-used state. In response to it, the control node changes the data indicative of the condition of use of the node identifier to the non-used state. Thus, the corresponding controlled node releases its own node identifier and hence can be separated from the wireless network.

Thus, the control node changes the data indicative of the conditions of use of the plurality of nodes identifiers, which are held in the storage unit, according to the request issued from the controlled node, whereby the corresponding controlled node enters into and separates from the wireless network and the settings of the network can be changed while the respective nodes are in commission. Further, controlled node enters into the wireless network with its own node identifier, and the control node can easily perform sending control on each node through the use of its corresponding node identifier.

### BRIEF DESCRIPTION OF THE DRAWINGS

Fig. 1 is a systematic diagram showing a wireless network illustrated as an embodiment;
Fig. 2 is a block diagram illustrating a configuration of a node for the wireless network;
Fig. 3 is a diagram depicting a basic format of a packet compliant with the IEEE1394 Standard;
Fig. 4 is a diagram showing a data format of an asynchronous packet compliant with the IEEE1394 Standard;
Fig. 5 is a diagram illustrating a data format of an isochronous packet compliant with the IEEE1394 Standard;
Fig. 6 is each diagram depicting the type of data block and the contents of each header;
Fig. 7 is a diagram showing a data format of an access · layer · command;
Fig. 8 is a diagram illustrating a radio communication data format using infrared rays;
Fig. 9 is a diagram depicting a data format of a cycle start packet compliant with the IEEE1394 Standard;
Fig. 10 is a diagram showing a structure of cycle time data;
Fig. 11 is a diagram illustrating an example of an assignment of time slots;
Fig. 12 is a flowchart for describing a packet reconfiguring processing operation;
Figs. 13A through 13E are respectively diagrams for describing data block converting and packet reconfiguring operations;
Fig. 14 is a diagram showing the contents stored in storage areas about nodes ID;
Fig. 15 is a flowchart for describing a control operation for a node initializing process;
Fig. 16 is a flowchart for describing a control operation for a node ID opening process;
Fig. 17 is a flowchart for describing a control operation for a process for adjusting the frequency of sending permission;
Fig. 18 is a flowchart for describing a control operation for a sending permission node determining process; and
Figs. 19A and 19B are respectively diagrams for describing other examples of a radio communication data format.

### BEST MODE FOR CARRYING OUT THE INVENTION

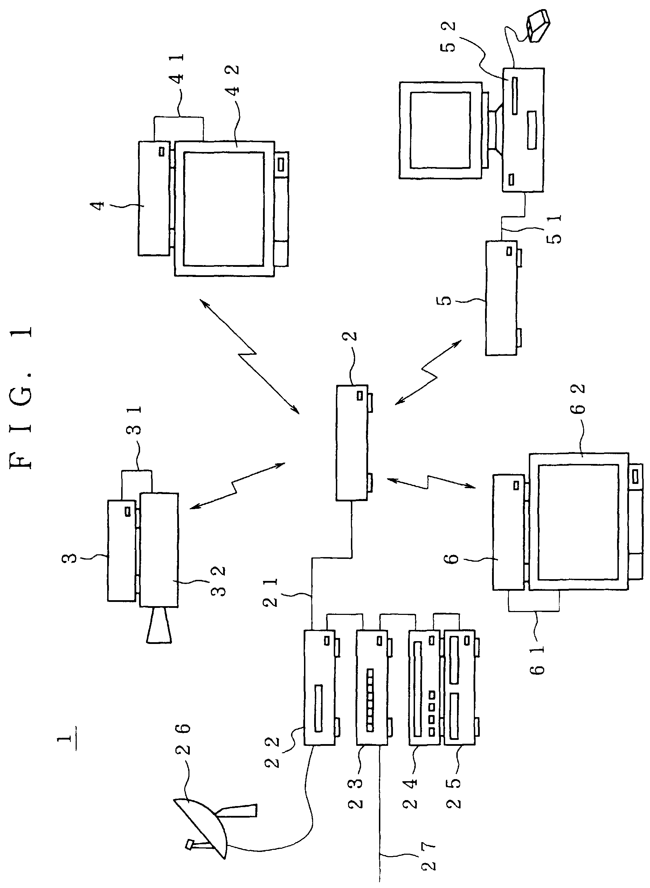

Fig. 1 shows an example of a configuration of a wireless network 1 using infrared rays as a radio communication medium. The present network 1 has five wireless network nodes (hereinafter called 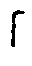 WN nodes 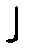 ) 2 through 6.

The WN node 2 is electrically connected to an IEEE1394 bus 21. Further, a satellite broadcasting receiver 22, a receiving device (set top box) 23 for CATV (cable television), a digital video disk (DVD) device 24 and a video cassette recorder (VCR) 25 are electrically connected to the bus 21 as IEEE1394 nodes. Incidentally, an antenna 26 for receiving a satellite broadcasting signal is electrically connected to the satellite broadcasting receiver 22. A cable 27, through which a CATV signal is transmitted, is electrically connected to the CATV set top box 23.

The WN node 3 is electrically connected to an IEEE1394 bus 31. Further, a video camera 32 used as an IEEE1394 node is electrically connected to the bus 31. The WN node 4 is electrically connected to an IEEE1394 bus 41. A monitor 42 used as an IEEE1394 node is electrically connected to the bus 41.

The WN node 5 is electrically connected to an IEEE1394 bus 51. Further, a computer 52 used as an IEEE1394 node is electrically connected to the bus 51. The WN node 6 is electrically connected to an IEEE1394 bus 61. Further, a monitor 62 used as an IEEE1394 node is electrically connected to the bus 61.

When data are transferred from a first node connected to a given WN node to a second node connected to another WN node in the wireless network 1 shown in Fig. 1, the data are converted to an infrared-ray signal and then the converted infrared-ray signal is transferred.

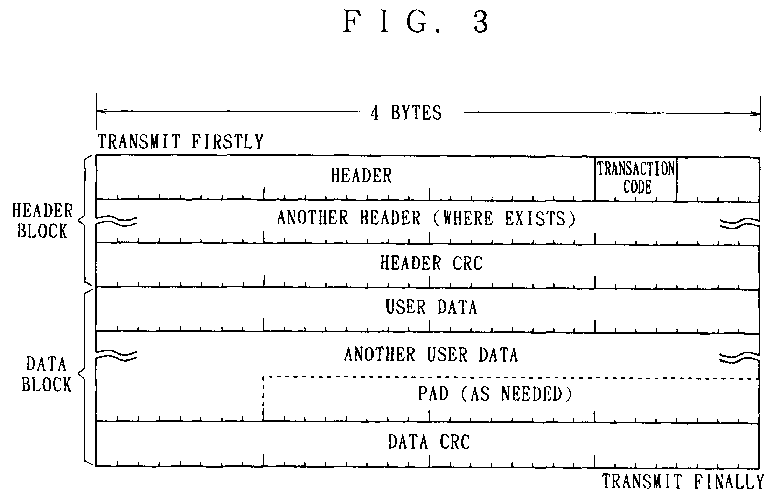

On the other hand, in the IEEE1394 Standard, data are transferred with a packet as a unit. Fig. 3 shows a data format at the execution of data communications compliant with the IEEE1394 Standard, i.e., a basic format of a packet. That is, the packet roughly comprises a header, a transaction code (tcode), a header CRC, user data, and data CRC. The header CRC is produced based on a header alone. In the IEEE1394 Standard, a node is defined so as to prohibit a header, which fails to pass a check of the header CRC, from performing an action thereon and responding thereto. In the IEEE1394 Standard as well, the header must contain the transaction code. The transaction code will define the classification of a principal packet.

Further, in the IEEE1394 Standard, an isochronous (synchronous) packet and an asynchronous (non-synchronous) packet are known as derivatives of the packet shown in Fig. 3. They are distinguished from each other by the transaction code.

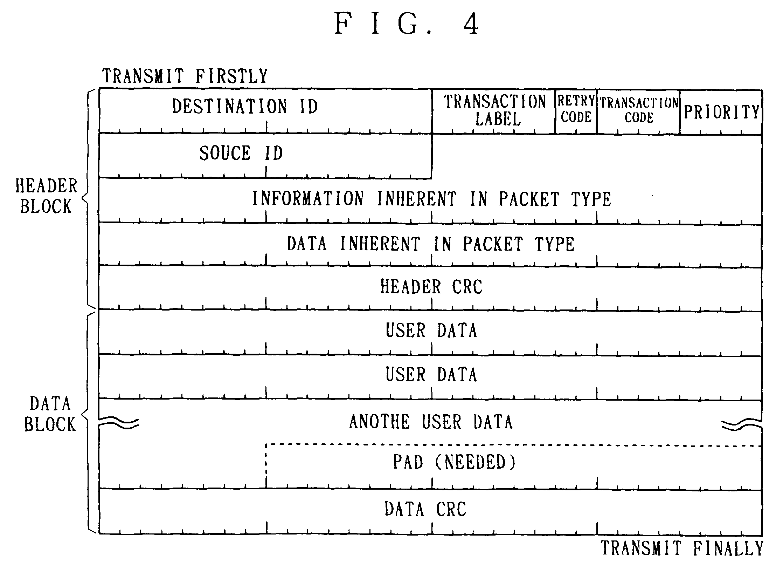

Fig. 4 shows a data format of the asynchronous packet. In the asynchronous packet, a header comprises an identifier (destination_ID) for a destination node, a transaction label (tl), a retry code (rt), a transaction code (tcode), priority information (pri), an identifier (source_ID) for a source node, information (destination_offset, rcode, reserved) inherent in packet type, data (quadlet_data, data_length, extended_tcode) inherent in packet type, and a header CRC.

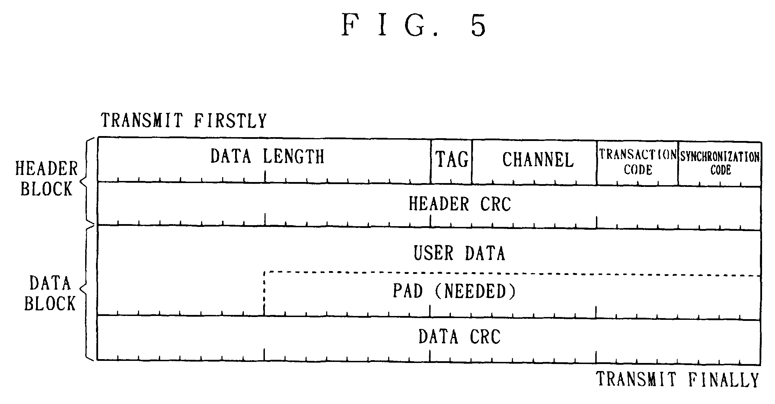

Fig. 5 shows a data format of the isochronous packet. In the isochronous packet, a header comprises a data length (data_length), a format tag (tag) of isochronous data, an isochronous channel (channel), a transaction code (tcode), a synchronization code (sy), and a header CRC.

The above-described packets (isochronous packet, asynchronous packet) compliant with the IEEE1394 Standard can be varied in length as already known. In the present embodiment, however, data are transferred from a certain WN node to another WN node with a data block having a fixed length as a unit. Therefore, each of the WN nodes employed in the present embodiment creates a fixed-length data block from packet data such as an isochronous packet, an asynchronous packet based on the IEEE1394.

When the length of a variable-length packet is now longer than that of the fixed-length data block, the corresponding packet is divided into plural form and then data in the corresponding packet are set so as to be contained in a plurality of data blocks. In this case, three types of data blocks are created as the fixed-length data blocks.

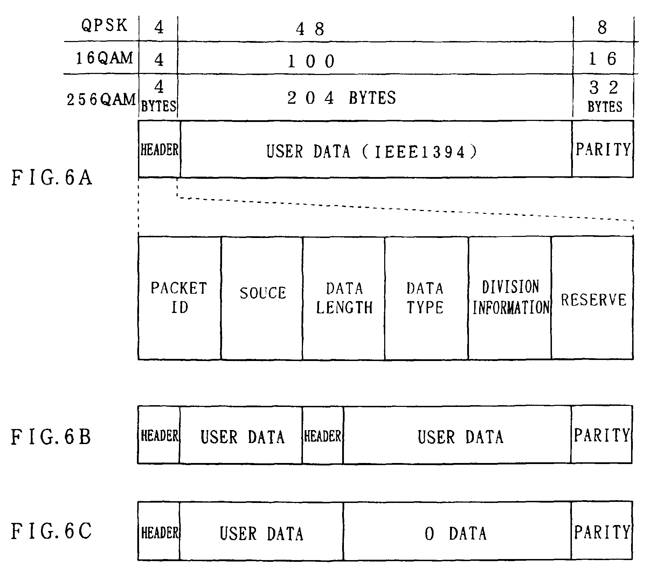

The first one is a data block having user data comprised of only data including one packet as shown in Fig. 6A. In this data block, a header is placed in front of the user data and error-correcting parity (ECC: Error Correction Code) with respect to the header and the user data is provided. The second one is a data block having user data comprised of data including a plurality of packets (two packets in the illustrated example) as shown in Fig. 6B. In this data block, headers are respectively placed in front of the user data, and error-correcting parity with respect to the headers and user data as a whole is placed.

The third one is a data block which has user data comprised of data including one or a plurality of packets (one packet in the illustrated example) and is added with 0 data (empty data) within its space area. In this data block, a header is placed in front of the user data and error-correcting parity with respect to the header, user data and 0 data as a whole is provided.

Incidentally, when the transmission rate of the data block is given as 24.576 Mbps, the parity is made up of 8 bytes and the others are comprised of 52 bytes. Further, the data block is QPSK-modulated so as to be transferred as data having 240 symbols. On the other hand, when the transmission rate is given as 2 x 24.576 Mbps, the parity is made up of 16 bytes and the others consist of 104 bytes. Further, the data block is 16-QAM-modulated so as to be transferred as data having 240 symbols. Further, when the transmission rate is given as 4 x 24.576 Mbps, the parity is made up of 32 bytes and the others are comprised of 208 bytes. Further, the data block is 256-QAM-modulated so as to be transferred as data having 240 symbols.

Further, the header is made up of 4 bytes and has a packet ID area, a source ID area, a data-length information area, a data-type information area, a division information area, and a reserve area. For example, a 7-bit packet ID is stored in the packet ID area. In this case, the original packet is identified by using 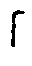 1 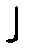 st through 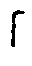 127 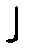 th packet ID in order. After the use of the 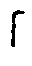 127 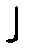 th packet ID, they are used again from the 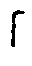 1 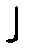 st packet ID. A node ID for a WN node corresponding to the origin of transmission is stored in the source ID area. When the wireless network is constructed of seven WN nodes at maximum, the node ID is defined as 3-bit data, for example. Incidentally, a node ID of a control node is defined as 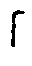 111 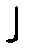 .

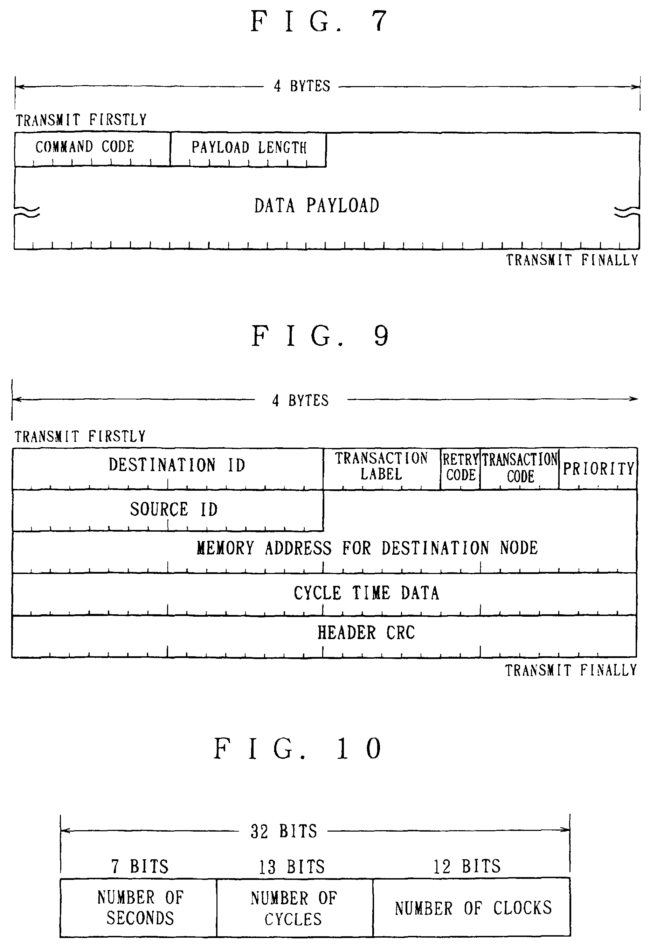

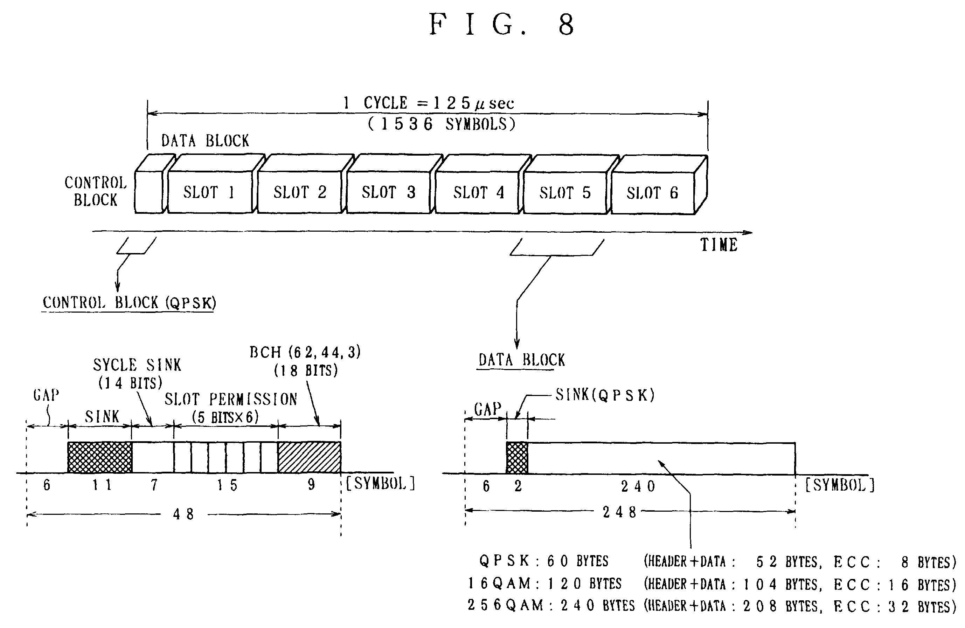

Information indicative of the length of user data is stored in the data-length information area. A code indicative of whether the user data is data having an isochronous packet, data having an asynchronous packet, or data for an access · layer · command, is stored in the data-type information area. When the type of data is given as the access · layer · command, such an access · layer · command having a data format as shown in Fig. 7 is placed within the user data of a data block.

The access · layer · command is used for command communications dedicated between mutual access · layers in order to carry out communications of set information between a WN node defined as a control node and a WN node defined as a node to be controlled. Since the access · layer · command is completed between the access · layers although placed in the user data of the data block, it does not take the packet format compliant with the IEEE1394. A command code indicates the type of access · layer · command. A payload length indicates the length of a command occupied within the user data (payload) in a byte unit. An access · layer · command is stored in a data payload. A portion stored in forward-packed form and insufficient for a quadlet (4 bytes) unit is padded with 0 data.

Referring back to Fig. 6A, the information about the division of a packet, such as 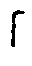 non-division 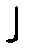 , 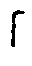 top of divided packets 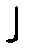 , 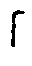 middle of divided packets 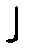 , 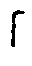 end of divided packets 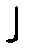 etc., is stored in the division information area.

As described above, the fixed-length data blocks created by the respective WN nodes are transferred through the use of a plurality of time slots provided within continuous respective cycles of 125 µsec. Fig. 8 shows a radio communication data format employed in the present embodiment. Six time slots (time slots 1 through 6) are provided within each cycle. Incidentally, one of the above-described WN nodes 2 through 6 is set so as to operate as a control node as will be described later. The transmission of the respective WN nodes is controlled by the control node.

The WN node activated as the control node sends a control block antecedent to the time slots 1 through 6 within each cycle. The control block is QPSK (Quadrature Phase Shift Keying)-modulated and comprises a gap area corresponding to 6 symbols, a sink area corresponding to 11 symbols, a cycle sink area corresponding to 7 symbols, a slot permission area corresponding to 15 symbols, and an error-correcting area corresponding to 9 symbols.

As will be described later, a node to be controlled performs a process for reproducing a transfer clock signal at a control node from data in the control block and synchronizing its own transfer clock signal with the reproduced transfer clock signal at the control node. Thus, the control block sent from the control node is also used as a clock synchronizing signal.

A sink for detecting the control block is placed in the sink area. Of 32-bit cycle time data contained in a cycle · start · packet transferred to an IEEE1394 bus once per 125 µsec (isochronous cycle) by an IEEE1394 node called "cycle · master", data corresponding to the twelve rightmost bits is stored in the cycle sink area. Incidentally, an area corresponding to the remaining 2 bits (1 symbol) in the cycle sink area is reserved.

Fig. 9 shows a data format of the cycle · start · packet. In the cycle · start · packet, a header comprises an identifier (destination_ID) for a destination node, a transaction label (tl), a retry code (rt), a transaction code (tcode), priority information (pri), an identifier (source_ID) for a source node, a memory address (destination_offset) for a destination node, cycle time data, and a header CRC. Fig. 10 shows a structure of 32-bit cycle time data. 7 leftmost bits indicate the number of seconds, 13 bits next to the 7 bits indicate the number of cycles, and 12 rightmost bits indicate a count value (number of clocks) of a clock signal of 24.576 MHz, respectively.

Thus, the WN node used as the controlled node performs a process for extracting the 12-bit data stored in the cycle sink area of the control block and updating cycle time data generated from its own cycle time data generator according to the extracted 12-bit data. As a result, relative time intervals of all the nodes are automatically synchronized at the heads of the respective cycles.

Incidentally, the respective nodes compliant with the IEEE1394 have CSR (Control and Status Registers) defined by ISO/IEC13213. Synchronous data stored in the cycle time register therein are transmitted in a substantially 125 µsec unit thereby to implement synchronization of the corresponding register of each node which performs isochronous transfer. As described above, the cycle time data generated from the cycle time data generator of the controlled node are updated based on the 12-bit data stored in the cycle sink area of the control block sent from the control node in each cycle of 125 µsec. It is thus possible to implement automatic synchronization and similar processing of each IEEE1394 cycle time register.

Referring back to Fig. 8, 5-bit information about the time slots 1 through 6 is stored in the slot permission area. The 5-bit information comprises bits 0 through 4. When the bit 4 is given as 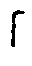 1 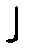 , it indicates the transmission of a tone request. When the bit 4 is given as 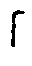 0 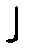 , it indicates the transmission of data. The tone request is a request for transmitting a tone signal to control transmission power. When the bit 3 is given as 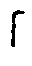 1 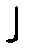 , it indicates isochronous data. When the bit 3 is represented as 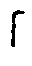 0 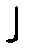 , it indicates asynchronous data. The bits 2 through 0 indicate nodes ID of WN nodes which permit sending, respectively. Here, the node ID of the WN node used as the control node as described above is represented as 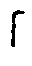 111 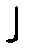 . As will be described later, a node ID intended for temporary utilization, which is used to provide an opportunity for sending, is given as 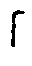 000 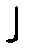 with respect to each WN node having no node ID. Thus, any of 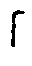 001 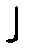 through 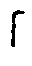 110 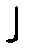 is used as a node ID of a WN node used as a controlled node.

An error-correcting code with respect to the cycle sink area and slot permission area is stored in the error-correcting area. A BCH (62, 44, and 3) code is used as the error-correcting code.

Although omitted in the description of Fig. 6, a gap area corresponding to 6 symbols and a sink area corresponding to 2 symbols are actually added in the data block transferred using the time slots 1 through 6 in addition to a data area corresponding to 240 symbols as shown in Fig. 8. A sink for detecting the data block is placed in the sink area. Incidentally, the sink area is always QPSK-modulated regardless of a data area modulation scheme.

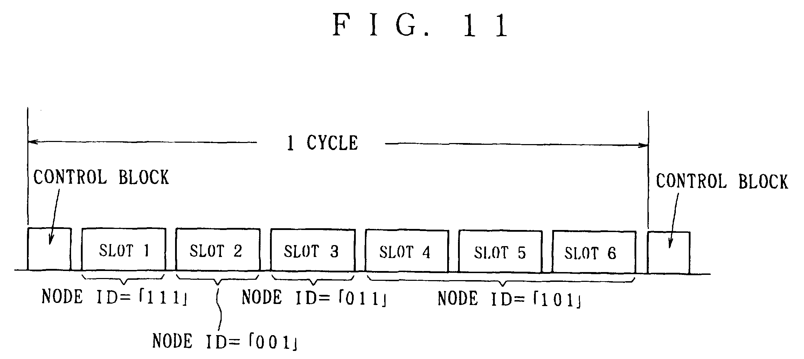

While the WN nodes capable of sending are specified or designated by the respective time slots 1 through 6 in the slot permission area of the control block as described above, the designation in this case is related to the subsequent cycles, e.g., the following cycle. Fig. 11 shows an example of assignment of time slots 1 through 6. In the present example, the sending or outgoing of a WN node (control node) having a node ID = 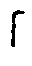 111 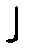 is permitted during the time slot 1. The sending of a WN node having a node ID = 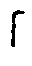 001 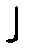 is permitted during the time slot 2. During the time slot 3, the sending of a WN node having a node ID = 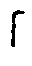 011 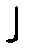 is permitted. Further, the sending of a WN node having a node ID = 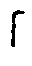 101 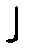 is permitted during the time slots 4 through 6.

A control node can control the outgoing or sending of each individual WN nodes (control node and controlled node) by using the slot permission area of the control block. In this case, the control node is capable of determining nodes whose outgoing are permitted by the respective time slots 1 through 6, according to data transfer information of the respective WN nodes, such as a transfer width reserved by the controlled node, the state of data to be transferred, reported by the controlled node, etc. A report about the reservation of the width of the transfer of data from the controlled node to the control node, the state of the data to be transferred, etc. is performed using the above-described access · layer · command, for example.

Thus, the control node can assign a time slot to a predetermined WN node so as to give permission about the sending of the reserved transfer width thereto and is capable of assigning other time slots to another WN node. Further, the control node is capable of easily managing the reservable maximum transfer width by the number of time slots to allow the transfer of ones other than the reserved transfer width. For example, data whose transfer width is not reserved and having no periodicity as in an asynchronous packet can be transferred by using time slots corresponding to a transfer width non-reserved upon transfer of an isochronous packet.

When the time slots for the non-reserved transfer width are used, the controlled node reports the situation of data to be transferred to its corresponding control node by using the above-described access · layer · command, for example. The control node calculates the distribution of the time slots corresponding to the non-reserved transfer width by using various information such as a transfer width of transfer-scheduled data obtained from the controlled node, the type of a packet therefrom, the priority of the contents, the maximum allowable transfer time, etc. thereby to determine a sending-approved node and the type of packet. It is thus possible to avoid the occurrence of a phenomenon, for example, that data are easy to remain or stay at WN nodes having lots of transfer-scheduled data, or that the transfer of data at which a transfer rate is desired, is delayed.

With respect to the data transfer using the time slots as described above, transfer processing can be changed every time slots. For example, an isochronous transfer assures the width of transfer of data and the time required transferring it, whereas an asynchronous transfer needs to insure the transfer contents rather than the transfer time. Accordingly, transfer processes such as a process for preferentially offering an available transfer width in regard to a transfer in which priority is given to the transfer time, a process for permitting retransfer processing upon the occurrence of an error in regard to a transfer for giving priority to the assurance of the contents, can be easily implemented in time slot units by performing transfers different in priority objects on these wireless networks in separate time slots.

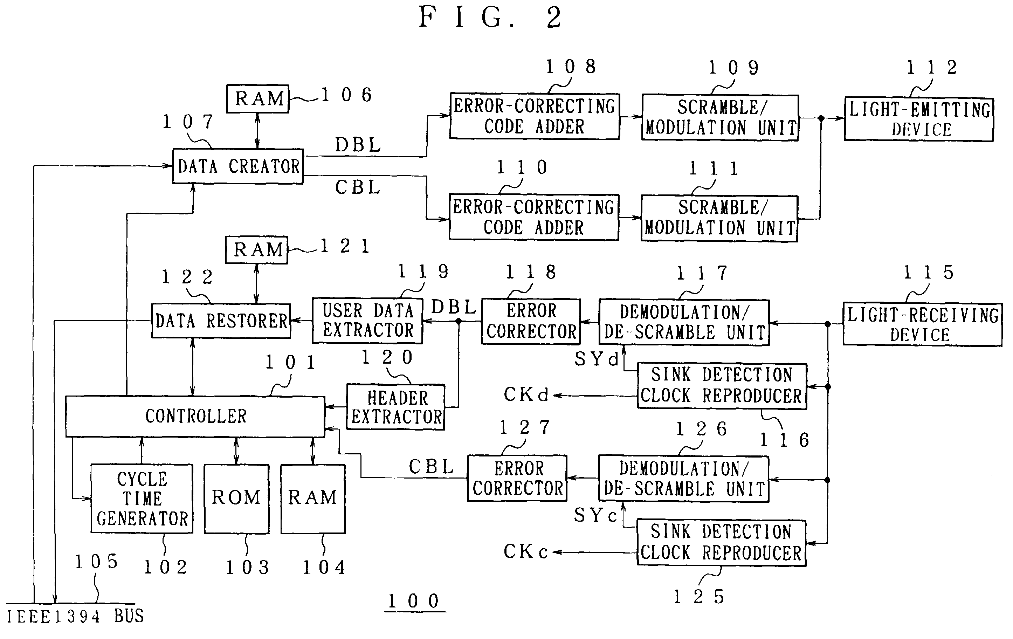

A configuration of a WN node 100 (corresponding to each of the WN nodes 2 through 6) will next be described. Fig. 2 shows the configuration of the WN node 100 used as a control node or a node to be controlled. The WN node 100 has a controller 101, which is provided with a microcomputer, for controlling the operation of the entire system. A cycle time data generator 102 for generating 32-bit cycle time data (see Fig. 10), a ROM (read only memory) 103 in which operating programs and the like for the microcomputer provided within the controller 101 are stored, and a RAM (random access memory) 104 used as a working memory

The cycle time data generator 102 is constructed so as to count up a clock signal of 24.576 MHz. When the WN node 100 serves as the control node, the twelve rightmost bits of the 32-bit cycle time data generated from the cycle time data generator 102 are inserted into a cycle sink area of a control block and supplied to the controlled node. On the other hand, when the WN node 100 serves as the controlled node, the cycle time data generated by the cycle time data generator 102 are updated based on the 12-bit data extracted from the cycle sink area of the received control block.

Further, the WN node 100 has a RAM 106 for temporarily storing packet data such as an isochronous packet, an asynchronous packet, etc. sent from other IEEE1394 nodes (not shown) connected to an IEEE1394 bus 105, and a data creator 107 for utilizing the packet data stored in the RAM 106 and creating a data block (corresponding to portions of headers and user data alone, see Figs. 6A through 6C) DBL under the control of the controller 101.

When the WN node 106 serves as the control node, the data creator 107 also creates a control block (corresponding to portions of a cycle sink area and a slot permission area alone, see Fig. 8) CBL sent or transmitted at the head of each cycle of 125 µsec. Further, the data creator 107 also creates an access · layer · command used for command communications dedicated between mutual access · layers to perform communications of set information between the control node and the controlled node. The access · layer · command is placed within the user data of the data block as described above and transferred.

Moreover, the WN node 100 has an error-correcting code adder 108 for adding error-correcting parity (ECC) to the data block DBL outputted from the data creator 107, and a scramble/modulation unit 109 for effecting a scramble process and a modulating process on data outputted from the error-correcting code adder 108 and thereafter adding a sink to the head.

The WN node 100 includes an error-correcting code adder 110 for adding an error-correcting code to the control block CBL outputted from the data creator 107, a scramble/modulation unit 111 for effecting a scramble process and a modulating process on data outputted from the error-correcting code adder 110 and thereafter adding a sink to the head, and a light-emitting device (light-emitting diode) 112 for outputting an infrared-ray signal corresponding to each of modulated signals outputted from the scramble/modulation units 109 and 111. Since the control block CBL is not created by the data creator 107 when the WN node 100 is now given as the controlled node, the error-correcting code adder 110 and the scramble/modulation unit 111 are not used.

The WN node 100 has a light-receiving device (photo diode) 115 for receiving the infrared-ray signal, and a sink detection · clock reproducer 116 for pattern-detecting a sink of a data block (see Fig. 8) from a signal outputted from the light-receiving device 115, outputting a detection timing signal SYd and generating a clock signal CKd synchronized with the data block whose sink is detected. The clock signal CKd is used upon processing the data block whose sink has been detected.

The WN node 100 has a demodulation/de-scramble unit 117 for performing a demodulating process and a de-scrambling process on the data block whose sink has been detected, based on the detection timing signal SYd, an error corrector 118 for using parity for the data block outputted from the demodulation/de-scramble unit 117 thereby to error-correct portions of a header and user data, a user data extractor 119 for extracting user data from the data block DBL outputted from the error corrector 118, and a header extractor 120 for extracting a header added to the user data from the data block DBL. The header extracted by the header extractor 120 is supplied to the controller 101.

The WN node 100 includes a RAM 121 for temporarily storing the user data extracted from the user data extractor 119, and a data restorer 122 for restoring the packet data, based on header information while using the user data stored in the RAM 121 and transmitting it to the IEEE1394 node electrically connected to the bus 105. Incidentally, when the user data are an access · layer · command, the command is transmitted to the controller 101 through the data restorer 122.

The WN node 100 includes a sink detection · clock reproducer 125 for pattern-detecting a sink of a control block (see Fig. 8) from the signal outputted from the light-receiving device 115, outputting a detection timing signal Syc and generating a clock signal CKc synchronized with the control block whose sink is detected. Here, the clock signal CKc is used upon processing the control block whose sink has been detected, and is used as a transfer clock signal for sending or outgoing processing.

The WN node 100 has a demodulation/de-scramble unit 126 for performing a demodulating process and a de-scrambling process on the control block whose sink has been detected, based on the detection timing signal SYc, and an error corrector 127 for using an error-correcting code for data outputted from the demodulation/de-scramble unit 126 thereby to error-correct the control block (corresponding to a cycle sink area and a slot permission area) CBL and supplying it to the controller 101.

When the WN node 100 serves as the control node, the demodulation/de-scramble unit 126 and the error corrector 127 are not used. On the other hand, when the WN node 100 is of the control node, the sink detection · clock reproducer 125 does not perform a synchronous process by reference to the clock signal reproduced from the control block and simply serves as a unit for generating a freerunning transfer clock signal.

Although not described above, the controller 101 defines the following rules upon header creation and data transmission in order to restore the proper or normal packet data by the data restorer 122 of the WN node 100 on the receiving side:
(a) Packets ID must be different from one another every packets to be transmitted. However, since a limitation is imposed on the number of selectable values of the packets ID, one same packet ID as previous may be used after the different packets ID have been used for a while. Therefore, in the present embodiment, each packet ID is used as 7-bit data as described above, and 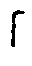 1 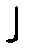 through 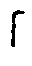 127 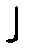 are repeatedly used;
(b) When packet data are divided into parts, they are prohibited from being transmitted by interchange of their division order;
(c) Since it is necessary to allow an isochronous packet to take precedence over an asynchronous packet, the isochronous packet may be transmitted before the completion of transmission of divided data of the asynchronous packet.

In order to allow the data restorer 122 of the WN node 100 on the receiving side to restore the normal packet data, the controller 101 utilizes the header information as follows. When the four types of information corresponding to the top of divided data, the middle or intermediate of the divided data, the end of the divided data, the non-division are stored in the division information area of the header as described above, the controller 101 can confirm the following eight conditions.
(1) Data having the same packet ID do not exist on the RAM 121,
   (a) and the leading data of the divided data are received;
   (b) and the intermediate data of the divided data are received;
   (c) and the final data of the divided data are received; or
   (d) and the non-divided data are received.
(2) Data having the same packet ID exist on the RAM 121,
   (a) and the leading data of the divided data are received;
   (b) and the intermediate data of the divided data are received;
   (c) and the final data of the divided data are received; or
   (d) the non-divided data are received.

Their conditions and operations at those times will be explained below.
(1 - a) The data having the same packet ID do not exist on the RAM 121 and the leading data of the divided data are received.
   A normal receiving state is held. Since the packet data cannot be reconstructed until the final data of the divided data are received, the received leading data of the divided data are stored in the RAM 121.
(1 - b) The data having the same packet ID do not exist on the RAM 121 and the intermediate data of the divided data are received.
   This is impossible where the normal reception is being carried out. This means a failure in the reception of the leading data of the same packet ID. Thus, since the packet data of this packet ID cannot be reconstructed, the received intermediate data of the divided data are abandoned.
(1 - c) The data having the same packet ID do not exist on the RAM 121 and the final data of the divided data are received.
   This is impossible where the normal reception is being performed. This means a failure in the reception of the leading data of the same packet ID. Thus, since the packet data of this packet ID cannot be reconstructed, the received final data of the divided data are abandoned.
(1 - d) The data having the same packet ID do not exist and the non-divided data are received.
   A normal receiving state is held. The packet data are reconstructed by the received data alone.
(2 - a) The data having the same packet ID exist on the RAM 121 and the leading data of the divided data are received.
   This is impossible where the normal reception is being carried out. This means that the same packet ID has been re-used without having to receive the final data of the previously received packet data. Thus, since the data on the RAM 121 cannot be reconstructed, the data are abandoned and the leading data received this time are newly stored in the RAM 121.
(2 - b) The data having the same packet ID exist on the RAM 121 and the intermediate data of the divided data are received.
   A normal receiving state is held. Intermediate data of the divided data, which are received this time, are connected to the back of the previously received data. Since the packet data cannot be reconstructed until the final data of the divided data are received, the intermediate data are stored in the RAM 121 again.
(2 - c) The data having the same packet ID exist on the RAM 121 and the final data of the divided data are received.
   A normal receiving state is held. The final data of the divided data, which are received this time, are connected to the back of the previously received data and thereby the packet data are reconstructed.
(2 - d) The data having the same packet ID exist on the RAM 121 and the non-divided data are received.
   This is impossible where the normal reception is being carried out. This means that the same packet ID has been re-used without having to receive the final data of the previously received packet data. Thus, since the data on the RAM 121 cannot be reconstructed, the data are abandoned and the packet data are reconstructed by only the data received this time.

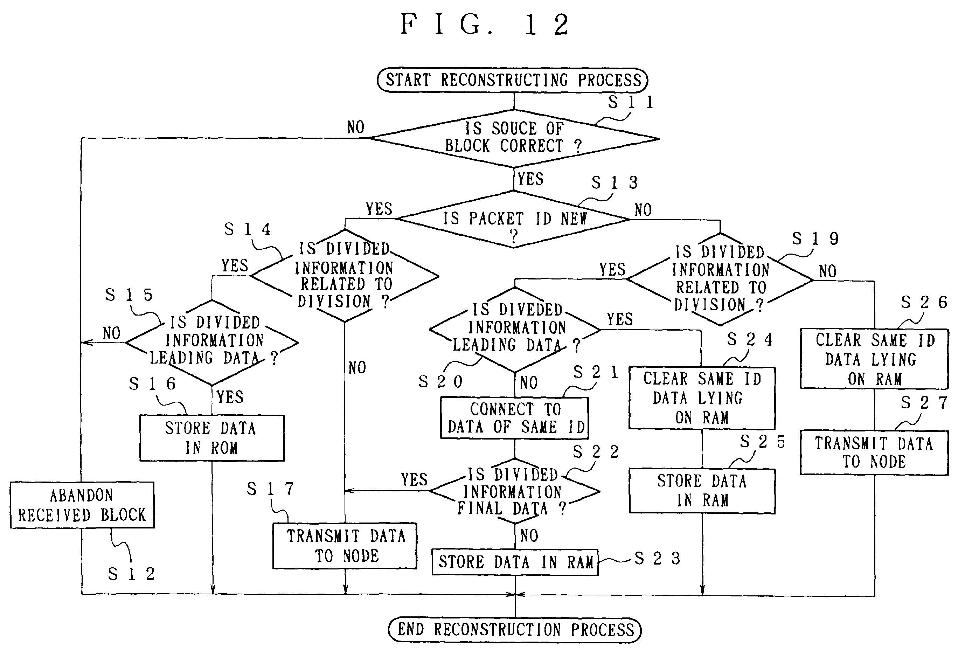

Fig. 12 is a flowchart showing an example of a process for reconstructing packet data, which has taken into consideration the above conditions.

The reconstructing process is started when a header of a data block is received. In Step S11, the controller 101 determines whether the source of the corresponding data block for the header is proper. In this case, the topology has been imagined that one control node controls a plurality of non-controlled nodes and non-control nodes communicate with the control node alone. Therefore, the controller 101 determines that the source is proper if a node ID for the source included in the header is a node ID for each non-controlled node when the WN node 100 is given as the control node. On the other hand, the controller 101 determines that the source is proper if the node ID for the source included in the header is a node ID for the control node when the WN node 100 is of the non-controlled node.

When the source is found to be proper, the process goes to Step S13. On the other hand, when the source is found not to be proper, the process goes to Step S12 assuming that a data block unnecessary to receive it therein has been received. In Step S12, the controller 101 makes a request to the data restorer 122 for abandonment of the received data. The data restorer 122 abandon user data in the corresponding data block and the reconstructing process terminates.

In Step S13, the controller 101 determines whether data of the same packet ID as a packet ID contained in the header are stored on the RAM 121. When the data are found not to be stored in the RAM 121 (this corresponds to the condition described in the paragraph (1) referred to above), the packet data are new ones to the data restorer 122. Thus, the controller 101 proceeds to Step S14 to reconstruct the packet data newly. On the other hand, when the data are found to be stored in the RAM 121 (this corresponds to the condition described in the paragraph (2) referred to above), some of the packet data have already been stored in the RAM 121. Therefore, the controller 101 proceeds to Step S19 to reconstruct packet data together with the data stored in the RAM 121 using the received data.

In Step S14, the controller 101 examines divided information contained in the header and determines whether the received data (user data) correspond to data ( 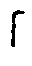 leading data of divided data 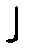 , 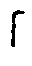 intermediate data of divided data 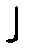 or 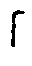 final data of divided data 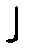 ) related to division. When the received data are found not to be the data related to division, i.e., the received data are found to be data related to non-division (this corresponds to the condition described in the paragraph (1 - d) referred to above), the process goes to Step S17. In Step S17, the controller 101 requests the data restorer 122 to transmit the received data to the IEEE1394 node as a packet as it is. The data restorer 122 sends the corresponding data to the IEEE1394 node and the reconstructing process finishes.

When the data received in Step S14 are found to be the data related to division, the process goes to Step S15. In Step S15, the controller 101 makes a decision as to whether the received data correspond to the leading data of the divided data. When the received data are found not to be the leading data (this corresponds to the conditions described in the paragraphs (1 - b) and (1 - c) referred to above), this means that the leading portion of the corresponding packet is not stored in the RAM 121. Therefore, the corresponding packet cannot be reconstructed. Thus, the process goes to Step S12, where the controller 101 makes a request to the data restorer 122 for abandonment of the received data. The data restorer 122 abandons user data in the corresponding data block and the reconstructing process terminates.

When the received data are found to be the leading data of the divided data in Step S15 (this corresponds to the condition described in the paragraph (1 - a) referred to above), the process goes to Step S16. In step S16, the controller 101 requests the data restorer 122 to store the received data in the RAM 121. The data restorer 122 stores the corresponding data in the RAM 121 and the reconstructing process terminates.

In Step S19, the controller 101 checks divided information contained in the header and determines whether the received data (user data) correspond to data ( 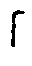 leading data of divided data 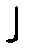 , 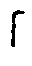 intermediate data of divided data 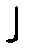 or 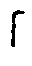 final data of divided data 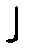 ) related to division. When the received data are found not to be the data related to division, i.e., the received data are found to be data related to non-division (this corresponds to the condition described in the paragraph (2 - d) referred to above), the process goes to Step S26. In Step S26, the controller 101 makes a request to the data restorer 122 for abandonment of the data of the same packet ID lying on the RAM 121. The data restorer 122 deletes the corresponding data from the RAM 121 and the process goes to Step S27. In Step S27, the controller 101 requests the data restorer 122 to send the data received this time to the IEEE1394 node as a packet as it is. The data restorer 122 transmits the corresponding data to the IEEE1394 node and the reconstructing process finishes.

When the data received in Step S19 are found to be the data related to the division, the process goes to Step S20. In Step S20, the controller 101 determines whether the received data correspond to the leading data of the divided data. When the received data are found to be the leading data (this corresponds to the condition described in the paragraph (2 - a) referred to above), the process goes to Step S24. In Step S24, the controller 101 makes a request to the data restorer 122 for abandonment of the data of the same packet ID lying on the RAM 121. The data restorer 122 deletes or clears the corresponding data from the RAM 121 and the process goes to Step S25. In Step S25, the controller 101 requests the data restorer 122 to store the data received this time in the RAM 121. The data restorer 122 stores the corresponding data in the RAM 121 and the reconstructing process terminates.

When the data received in Step S20 are found not to be the leading data of the divided data, i.e., the intermediate data thereof or the final data thereof, the process goes to Step S21. In Step S21, the controller 101 requests the data restorer 122 to read data of the same packet ID from the RAM 121 and connect the data received this time to the back of the read data. The data restorer 122 executes this and the process goes to Step S22.

In Step S22, the controller 101 determines whether the received data correspond to the final data of the divided data. When the received data are found to be the final data thereof (this corresponds to the condition described in the paragraph (2 - c) referred to above), this means that the data having the corresponding packet ID have been connected to the end. Therefore, the process goes to Step S17. In Step S17, the controller 101 requests the data restorer 122 to transmit the connected data to the IEEE1394 node as a packet. The data restorer 122 transmits said data to the IEEE1394 node and the reconstructing process terminates.

When it is determined in Step S22 that the received data does not correspond to the final data (this corresponds to the condition described in the paragraph (2 - b) referred to above), this means that the subsequent data of the corresponding packet is transmitted later. Therefore, the process goes to Step S23. In Step S23, the controller 101 makes a request to the data restorer 122 for storage of the connected data in the RAM 121. The data restorer 122 stores the corresponding data in the RAM 121 and the reconstructing process terminates.

Incidentally, if a plurality of non-controlled nodes use the same packet ID at the same time where packets are received from the plurality of non-controlled nodes as in the case of the control node, for example, in the flowchart shown in Fig. 12, there is a possibility that malfunctions such as an erroneous connection, deletion of fragments, etc. will occur. When the packet data compliant with the IEEE1394 Standard are transmitted, it is necessary to transmit data of an isochronous packet in preference to it. Therefore, the isochronous packet is easy to be reconstructed on the receiving side as compared with the asynchronous packet. Thus, there is a high possibility that the isochronous packet and the asynchronous packet will be different from each other in the time required to permit the re-use of the packet ID.

It is thus considered that when each packet ID is examined in Step S13 referred to above, the node ID of the source and the type of data are also used as parameters. Owing to the use of the node ID of the source for a distinction between the packets ID, they can be distinguished from one another even if the plurality of nodes make use of the same packet ID at the same time. Further, owing to the utilization of the type of data for the distinction between the packets ID, the management of the packets ID for the isochronous packet and asynchronous packet, which are different in the time required to allow the re-use of the packet ID, can be facilitated.

Referring to the flowchart shown in Fig. 12, the data block (see Fig. 6A) comprised of only one packet data is executed each time the data block is received, whereas the data block (see Fig. 6B) comprised of the plurality of packet data is executed every user data divided according to each individual headers.

When there is no packet data to be transmitted corresponding to each block size, the remainder of data block is padded with 0 data (see Fig. 6C). At this time, the controller 101 for discriminating between the user data according to the header should be able to distinguish between the presence of the user data as shown in Fig. 6B and the absence of the user data as shown in Fig. 6C. Thus, 0 is set as a prohibition code in a predetermined area (e.g., a packet ID area) of each header. When the user data exist, a value other than 0 is set so as to enter in the predetermined area. Consequently, the controller 101 can draw a distinction between the presence and absence of the user data by placing the header with the prohibition code set in the predetermined area at the head of the 0 data.

The operation of the WN node (wireless network node) 100 shown in Fig. 2 will next be described.

A description will first be made of a case where the WN node 100 is of a control node. An outgoing or sending operation thereof is performed as follows:

Under the control of the controller 101, the data creator 107 creates a control block CBL (see Fig. 8) at the head of each cycle of 125 µsec. Thereafter, the error-correcting code adder 110 adds an error-correcting code to the control block CBL. Further, the scramble/modulation unit 111 effects a scramble process and a modulating process on the control block CBL and thereafter adds a sink thereto, thereby forming an outgoing or sending signal for the control block. The light-emitting device 112 is driven by the signal, so that the control block is outputted from the light-emitting device 112 as an infrared-ray signal.

When packet data such as an isochronous packet, an asynchronous packet or the like are transmitted from the IEEE1394 node to the data creator 107 through the bus 105, the packet data are temporarily stored in the RAM 106. Under the control of the controller 101, the data creator 107 creates each data block DBL (see Figs. 6A through 6C) from the packet data stored in the RAM 106. The data creator 107 outputs a respective one data block DBL with timing of each time slot at which its own outgoing or sending is allowed. The error-correcting code adder 108 adds an error-correcting code to the data block DBL. Further, the scramble/modulation unit 109 performs a scramble process and a modulating process on the data block and thereafter adds a sink thereto, thereby forming a sending signal for the data block. The light-emitting device 112 is driven by the signal, whereby the data block is outputted from the light-emitting device 112 as an infrared-ray signal.

A receiving operation of the WN node is performed as follows. The light-receiving device 115 receives the infrared-ray signal for the data block. A signal outputted from the light-detecting device 115 is supplied to the sink detection · clock reproducer 116 where the sink of the data block is detected, whereby a detection timing signal SYd is obtained and a clock signal CKd synchronized with the data block whose sink has been detected, is generated.

Further, the output signal of the light-detecting device 115 is supplied to the demodulation/de-scramble unit 117 where a demodulating process and a de-scramble process are effected on the signal, based on the detecting timing signal SYd. Further, data outputted from the demodulation/de-scramble unit 117 are supplied to the error corrector 118 where the data block DBL is error-corrected using an error-correcting code.

The data block DBL outputted from the error corrector 118 is supplied to the header extractor 120 where the corresponding header is extracted, followed by supplying said header to the controller 101. Similarly, the data block DBL outputted from the error corrector 118 is supplied to the user data extractor 119 from which user data thereof are supplied to the data restorer 122. The data restorer reconstructs packet data from the extracted user data under the control of the controller 101 based on information about the header. The reconstructed packet data are sent to the IEEE1394 node through the bus 105.

A description will be further made of a case where the WN node 100 is of a controlled node. Its sending operation is carried out as follows:

When packet data such as an isochronous packet, an asynchronous packet or the like are transmitted from the IEEE1394 node to the data creator 107 through the bus 105, the packet data are temporarily stored in the RAM 106. Under the control of the controller 101, the data creator 107 creates each data block DBL (see Figs. 6A through 6C) from the packet data stored in the RAM 106. The data creator 107 outputs a respective one data block DBL with timing of each time slot at which its own outgoing or sending is allowed. The error-correcting code adder 108 adds an error-correcting code to the data block DBL. Further, the scramble/modulation unit 109 performs a scramble process and a modulating process on the data block and thereafter adds a sink thereto, thereby forming a sending signal for the data block. The light-emitting device 112 is driven by the signal, whereby the data block is outputted from the light-emitting device 112 as an infrared-ray signal.

A receiving operation of the WN node is performed as follows. The light-detecting device 115 receives infrared-ray signals for a control block and a data block. A signal outputted from the light-detecting device 115 is supplied to the sink detection · clock reproducer 125 where the sink of the control block is detected, whereby a detection timing signal Syc is obtained and a clock signal CKc synchronized with the control block whose sink has been detected, is generated. As described above, the clock signal CKc is used to process the control block and used as a transfer clock signal. That is, the outgoing or sending operation referred to above is executed in synchronism with the transfer clock signal.

Further, the output signal of the light-detecting device 115 is supplied to the demodulation/de-scramble unit 126 where a demodulating process and a de-scramble process are effected on the signal, based on the detecting timing signal SYc. Further, data outputted from the demodulation/de-scramble unit 126 is supplied to the error corrector 127 where the control block CBL is error-corrected using an error-correcting code.

The control block CBL outputted from the error corrector 118 is supplied to the controller 101. The controller 101 extracts 12-bit data contained in a cycle sink area of the control block CBL and updates cycle time data generated from the cycle time data generator 102, based on the 12-bit data. Thus, relative time intervals of all the nodes are automatically synchronized at the heads of the respective cycles. Further, the controller 101 can recognize each time slot at which its own outgoing or sending is allowed, from information in the slot permission area of the control block CBL.

Further, the output signal of the light-receiving device 115 is supplied to the sink detection · clock reproducer 116 where the sink of the data block is detected, whereby a detection timing signal SYd is obtained and a clock signal CKd synchronized with the data block whose sink has been detected, is generated.

The output signal of the light-receiving device 115 is supplied to the demodulation/de-scramble unit 117 where a demodulating process and a de-scrambling process are effected on the signal, based on the detection timing signal SYd. Further, data outputted from the demodulation/de-scramble unit 117 are supplied to the error corrector 118 where the data block DBL is error-corrected by using an error-correcting code.

The data block DBL outputted from the error corrector 118 is supplied to the header extractor 120 where the corresponding header is extracted, followed by supplying said header to the controller 101. Similarly, the data block DBL outputted from the error corrector 118 is supplied to the user data extractor 119 from which user data thereof are supplied to the data restorer 122. The data restorer reconstructs packet data from the extracted user data under the control of the controller 101 based on information about the header. The reconstructed packet data are sent to the IEEE1394 node through the bus 105.

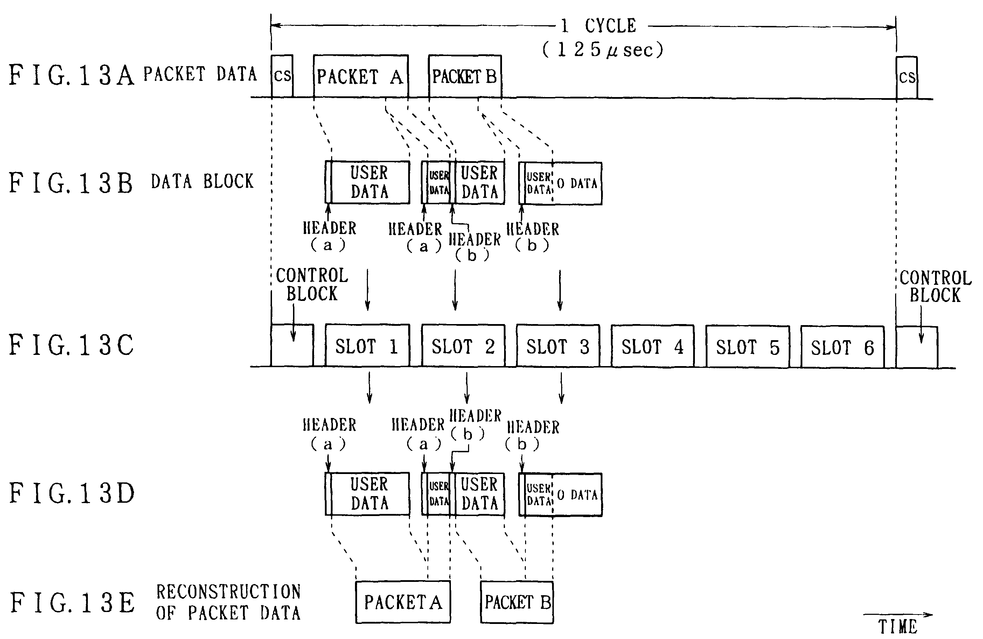

A description will next be made of an operation example at the time that packet data compliant with the IEEE1394 Standard are transferred from a first WN node to a second WN node, by using Figs. 13A through 13E.

Now consider where after a cycle · start · packet (CS) has been transmitted from an IEEE1394 node to a data creator 107 of the first WN node as shown in Fig. 13A, a packet A and a packet B are transmitted as packet data. Incidentally, the cycle · start · packet is transmitted once per 125 µsec from a cycle · master. However, it is not necessarily transmitted at 12-µsec time interval. The time interval might be greater than 125 µsec according to the size of the packet data.

The data creator 107 creates fixed-length data blocks from these packets A and B as shown in Fig. 13B. In this case, for example, a data block having only data in the packet A, a data block having data in the packets A and B, a data block having only data in the packet B and in which 0 data are placed in a space area, etc. are created according to data lengths of the packets A and B. In this case, headers respectively having information about the original packets, divided information, etc. are provided at the heads of data (user data) constituting the respective packets.

Thus, the corresponding data block created by the data creator 107 of the first WN node are sent to the second WN node through the use of time slots 1 through 3 at which outgoing or sending thereof is allowed by a WN node used as a control node as shown in Fig. 13C. In this case, error-correcting parity is added to each data block and subjected to a scramble process and a modulating process, after which a sink is added to each data block, which in turn is transmitted as an infrared-ray signal.

As shown in Fig. 13D, the second WN node receives each data block sent from the first WN node. User data extracted from the data block are supplied to a data restorer 122. Further, the header extracted from the data block is supplied to a controller 101. The data restorer 122 reconstructs the original packet data from the user data as shown in Fig. 13E, based on the information about the original packets, the divided information, etc. contained in the headers. The packet data are transmitted to the IEEE1394 node.

A description will next be made of how to enter into and separate from the wireless network shown in Fig. 1 and how to apply nodes ID to the respective WN nodes in the wireless network.

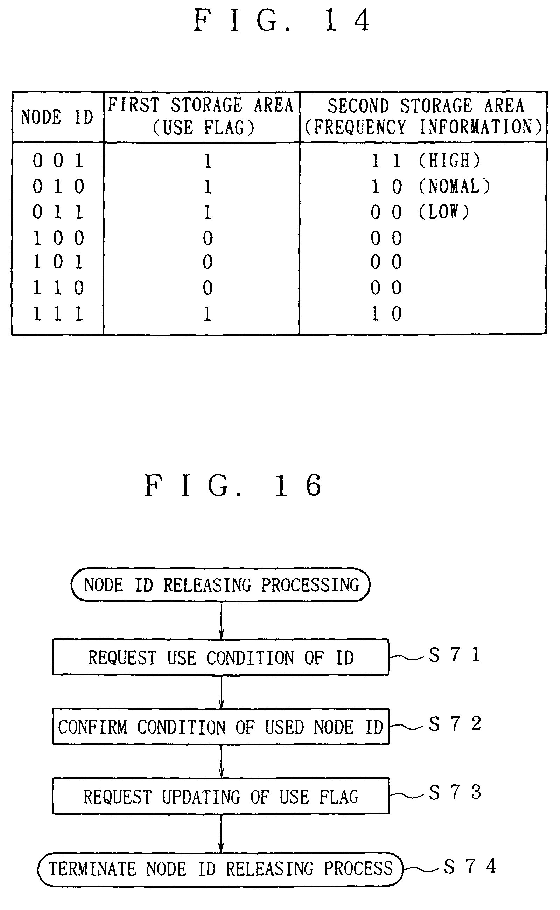

In the present embodiment, a wireless network having seven WN nodes at maximum can be constructed. Each node ID comprises 3-bit data. As described above, 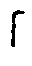 111 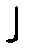 is defined as a node ID for each control node, 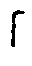 000 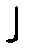 is defined as a node ID for the purpose of temporary utilization, and a node ID for each controlled node is defined as any of 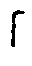 001 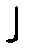 through 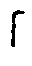 110 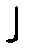 . The application of the nodes ID to the controlled nodes is collectively managed by the control node. Therefore, the RAM 104 of the WN node 100 (see Fig. 2) capable of serving as the control node is provided with a first storage area for storing therein a use flag indicative of the condition of usage of each node ID, and a second storage area for storing therein information about the frequency of outgoing or sending of the WN node having the node ID as shown in Fig. 14. A node ID at which the use flag is 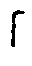 1 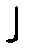 , indicates that it is in use, and a node ID at which the use flag is 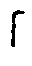 0 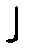 , indicates its non-use. Further, the frequent information is set as 2-bit data. 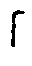 11 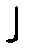 indicates high frequency, 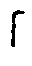 10 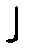 indicates normal frequency, and 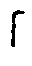 00 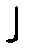 indicates low frequency, respectively. Incidentally, the frequency with respect to each non-used node ID is set to 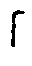 00 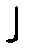 .

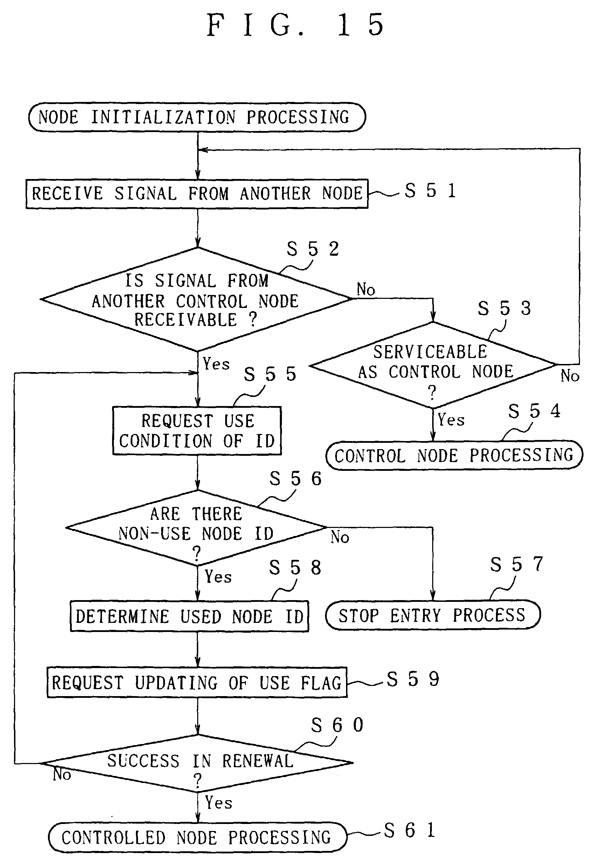

A node initializing process will next be explained using a flowchart shown in Fig. 15. A control program for the node initializing process is started up with power-on, for example.

When the node initializing process is started up, the WN node 100 starts to receive a signal from another WN node in Step S51. It is determined in step S52 whether it can receive a control block from a WN node 100 used as a control node.

When it is found that the control block cannot be received, this means that the wireless network is not yet constructed. Therefore, the WN node determines in Step S53 whether it itself is able to serve as the control node. Here, the WN node 100 capable of serving as the control node, is provided with the first storage area for storing therein the use flag indicative of the condition of usage of each node ID, and the second storage area for storing therein the information about the frequency of outgoing or sending of the WN node having the node ID as described above. When the WN node is found to be unable to serve as the control node, the control program is returned to Step S51. On the other hand, when the WN node is found to be able to serve as the control node, it proceeds to Step S54 where it serves as the control node, whereby the WN node is shifted to a control node processing state.

In this case, the WN node 100, which has just taken on the control node, has no controlled nodes which serve as objects for communications in the corresponding wireless network. Therefore, the WN node serving as the control node continues to send the control block at 125 µsec intervals, for example. Owing to the outgoing or sending of the control block, another WN node 100 is prevented from serving as the control node within the corresponding wireless space.

When it is determined in Step S52 that a signal from the WN node 100 used as the control node, e.g., a control block can be received, the WN node proceeds to Step S55 to enter into the corresponding wireless network as the controlled node. In the slot permission area of the control block (see Fig. 8) as described, the WN node 100 capable of sending with each individual time slots 1 to 6 in the next cycle is designated or specified through the use of the node ID. By using the node ID 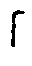 000 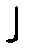 for the purpose of the temporary utilization, a sending's opportunity is given to a WN node 100 having no node ID.

In Step S55, the WN node 100 makes a request to a control node for transmission of the use condition of the node ID by using a time slot designated by the node ID 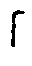 000 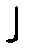 . This request is performed using an access · layer · command. When the request is made, the WN node 100 used as the control node refers to the use flag of the node ID stored in the first storage area of the RAM 104 and transmits the use condition of the node ID to the new node to which the request for the transmission of the use condition of the node ID is made. The transmission of the use condition is also performed using the access · layer · command.

It is next determined based on the use condition of each node ID in Step S56 whether non-used nodes ID exist. When the no-used nodes ID are absent, the control program proceeds to Step S57 where a process for entering controlled nodes into the wireless network is stopped. It is thus not possible to enter controlled nodes exceeding six into the wireless network.

When the non-used nodes ID are found to exist in Step S56, the control program proceeds to Step S58 where its own used node ID is determined from the non-used nodes ID. In Step S59, the WN node requests the WN node 100 used as the control node to update the use flag corresponding to the determined node ID from 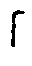 0 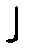 to 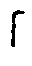 1 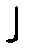 through the use of the time slot designated by the above-described node ID 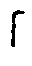 000 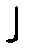 . This request is performed by using the access · layer · command.

When the request is made, the WN node 100 used as the control node renews the use flag of the node ID, whose updating has been requested as described above, of the nodes ID stored in the first storage area of the RAM 104 from 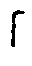 0 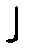 to 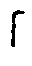 1 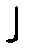 . When the use flag corresponding to the node ID, whose updating has been requested, is already renewed to 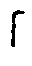 1 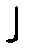 , there is a high possibility that while the corresponding new node is performing processing, the use flag for the corresponding node ID would be updated to 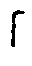 1 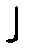 by a request issued from another new node, thereby resulting in a failure in renewal. The WN node 100 used as the control node notifies a success or failure in renewal to the new node to which the renewal of the use flag of the corresponding node ID is requested. This notification is also performed by the access · layer · command.

It is next determined in Step S60 whether the use flag has succeeded in its renewal. When the renewal is founded to have failed, the control program is returned to Step S55 where the WN node requests the control node to transmit the use condition of each node ID again in order to enter into the corresponding wireless network as a controlled node. Therefore, the operation similar to above is repeated. On the other hand, when the renewal is found to have succeeded, the WN node is brought to a controlled node specified by the corresponding node ID and shifts to a controlled node processing state in Step S61.

Owing to the above node initializing process, the new node automatically obtains a node ID and is able to enter into the corresponding wireless network, based on the so-obtained node ID.

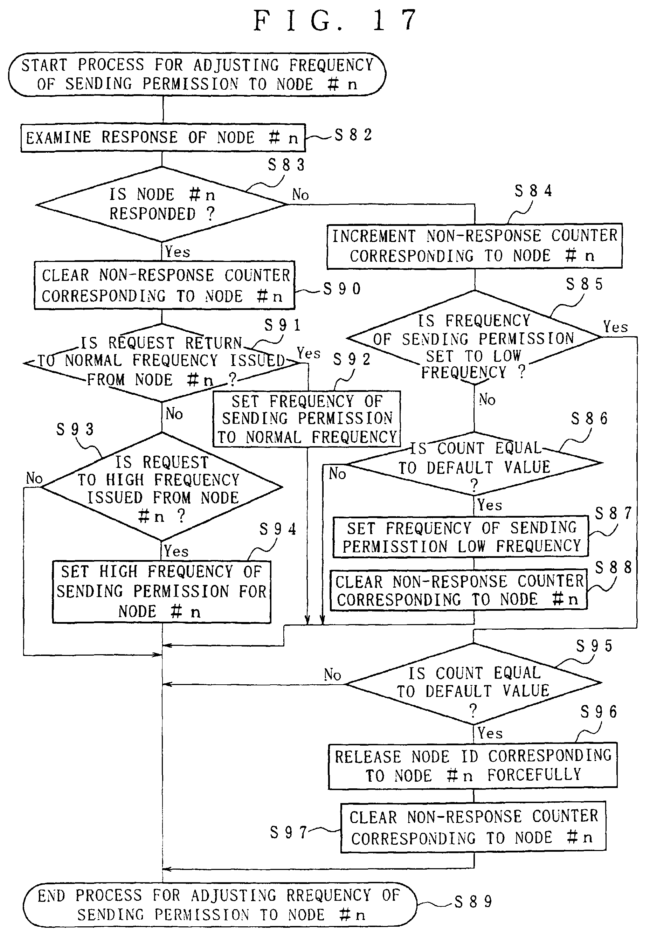

A description will next be made of a node ID releasing process at the time that a WN node 100 used as a controlled node is separated from the corresponding wireless network, with reference to a flowchart shown in Fig. 16. A control program for this node ID releasing process is started up with power-off, for example.

When the node ID releasing process is started, the WN node 100 makes a request to a control node for the transmission of the use condition of each node ID through the use of a time slot designated by its own node ID in Step S71. When the request is made, the WN node used as the control node refers to the use flag corresponding to each node ID stored in the first storage area of the RAM 104 and transmits the use condition of the corresponding node ID to the node to which the transmission of the use condition of the node ID is requested.

Next, in Step S72, the WN node confirms that its own node ID is in use, according to the use condition of each node ID. In Step S73, the WN node requests the WN node 100 used as the control node to update the use flag corresponding to its own node ID from 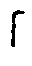 1 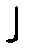 to 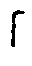 0 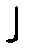 through the use of the time slot specified by its own node ID. In Step S74, the node ID releasing process terminates.

When the request is made, the WN node 100 used as the control node rewrites the renewal-requested use flag corresponding to the node ID as described above, of the nodes ID stored in the first storage area of the RAM 104, from 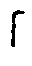 1 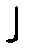 to 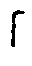 0 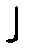 .

Owing to the above-described node ID releasing process, each controlled node having the node ID automatically releases its node ID and is hence separated from the corresponding wireless network.

As described above, the control program (see Fig. 15) for the node initializing process is started up when the WN node 100 is power-on. On the other hand, the control program (see Fig. 16) for the node ID releasing process is started up when the WN node 100 is power-off. Therefore, the corresponding wireless network continues to exist unless the power of the control node is turned off. Other nodes obtain their nodes ID with power-on and can enter into the corresponding wireless network as controlled nodes. With power-off in reverse, the nodes release their nodes ID, so that they can be separated from the corresponding wireless network.

Meanwhile, communications between a control node and a controlled node are considered to lose contact with each other when a WN node 100 constructing a wireless network is moved outward from the network and a signal is cut off or screened even when it is placed within the network. Even in such a case, the network cannot be operated with efficiency even though the control node gives permission of sending to the corresponding controlled node in a manner similar to other controlled nodes. Therefore, the WN node 100 used as the control node executes a process for adjusting or controlling the frequency of sending permission.

A description will be made of a process for adjusting the frequency of sending permission to a node #n by using a flowchart shown in Fig. 17. A control program for the adjusting process is started up each time the permission of sending or outgoing is given to the node #n.

First, the reaction or response of the node #n is examined in Step S82. It is determined in Step S83 whether the node #n has reacted or responded. When the node #n sends a signal in a time slot at which its sending is permitted, it is determined that the node #n has reacted.

When the node #n is found not to react in Step S83, the control program proceeds to Step S84 where a count of a non-reaction or non-response counter corresponding to the node #n is incremented. In Step S85, a decision is made as to whether the frequency of sending permission to the node #n is set to low frequency. In other words, it is determined whether frequency information corresponding to the node #n stored in the second storage area (see Fig. 14) of the RAM 104 is given as 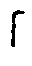 00 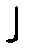 . When the frequency of sending permission to the node #n is found not to be low frequency, the control program proceeds to Step S86 where it is determined whether the count of the non-reaction counter is a default value, i.e., the number of non-reactions reaches a predetermined number of times.

When the count is found not to be the default, the control programs proceeds to Step S89 where the process for controlling the frequency of sensing permission to the node #n terminates. On the other hand, when the count is found to be the default, the control program proceeds to Step S87 where the frequency information of the node #n stored in the second storage area of the RAM 104 is renewed to 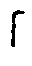 00 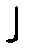 and the frequency of sending permission to the node # is set to the low frequency. Further, the count of the non-reaction counter of the node #n is cleared to 0 in Step S88. Thereafter, the control program proceeds to Step S89 where the process for controlling the frequency of sending permission to the node #n is completed. Owing to the setting of the sending frequency for the node #n to the low frequency as described above, the frequency of sending permission to the node #n becomes low as will be described later and the opportunities of sending permission to other nodes are enlarged, thereby allowing efficient operation of the wireless network.

When the frequency of sending is found to be set to the low frequency in Step S85, the control program proceeds to Step S95 where it is determine whether the count of the non-reaction counter is a default value. When the count is found not to be the default value, the control program proceeds to Step S89 where the process for adjusting the frequency of sending permission to the node #n is terminated. On the other hand, when the count is found to be the default value, the control program proceeds to Step S96 where a node ID corresponding to the node #n is forcefully released. That is, a use flag corresponding to the node ID, which has been stored in the first storage area of the RAM 104, is renewed from 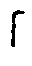 1 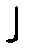 to 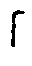 0 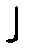 . In Step S97, the count of the non-reaction counter of the node #n is cleared to 0 and thereafter the control program proceeds to Step S89 where the process for adjusting the frequency of sending permission to the node #n terminates.

The forcefully releasing of the node ID as described above makes it possible to eliminate waste that the node ID and the transfer width continues to be offered to each node expected to be already unusable. The corresponding node #n whose node ID has been forcefully released, automatically detects that its own node ID is forcefully released owing to the absence of the sending permission altered from the lowered state of the frequency of sending permission. The corresponding node #n immediately loses the node ID and hence needs the node initializing process (see Fig. 15) to enter into the wireless network.

When it is determined in Step S83 that the node #n has reacted, the control program proceeds to Step S90 where the count of the non-reaction counter of the node #n is cleared to 0. It is determined in Step S91 whether a request for a return to the normal frequency is made from the node #n. This return request is transmitted by the above-described access · layer · command. When the request for the return to the normal frequency is given, the control program proceeds to Step S92 where the frequency of sending permission is set to the normal frequency. In other words, the frequency information about the node #n stored in the second storage area of the RAM 104 is renewed from 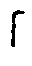 00 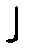 to 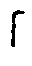 10 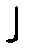 . Thereafter, the control program proceeds to Step S89 where the process for controlling the frequency of sending permission to the node #n terminates.

When the request for the return to the normal frequency is found not to be issued from the node #n in Step S91, the control program proceeds to Step S93 where it is determined whether a request to high frequency is issued from the node #n. This request is also transmitted through the use of the above-described access · layer · command. When the request to the high frequency is not made, the control program proceeds to Step S89 where the process for adjusting the frequency of sending permission to the node #n is finished. On the other hand, when the request to the high frequency is made, the control program proceeds to Step S94 where the frequency of sending permission is set to the high frequency. In other words, the frequency information about the node #n stored in the second storage area of the RAM 104 is renewed to 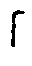 11 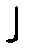 . Thereafter, the control program proceeds to Step S89 where the process for controlling the frequency of sending permission to the node #n terminates.

The above-described process for adjusting the frequency of sending permission is performed every time the permission of sending or outgoing is given to each node. Thus, the network can be operated with efficiency.

Incidentally, a WN node 100 connected to a node such as a headphone whose principal object is to receive data, does not need the high frequency of sending permission. In this case, the WN node 100 may make a request to its corresponding control node for the setting of the frequency of sending permission to low frequency. Since a reduction in sending or outgoing time is related to a reduction in the amount of consumption of power necessary for the transmission, a battery for a portable handyphone system or the like in particular can prolong its operating time.

As described above, the control node prepares node ID for the purpose of temporary utilization to give a sending opportunity to node with no node ID. The control node can provide the permission of sending by the node ID for the purpose of temporary utilization in a cycle for the corresponding node set to the low frequency, for example. Alternatively, the control node can provide the permission of sending by the node ID for the purpose of temporary utilization by utilizing that there is no data to be sent to other nodes and allowance is made for a data transfer width. This is because a node desiring to enter into the corresponding wireless network does not necessarily exist within the network at all times.

When the sending permission is made by node ID for the purpose of temporary utilization, two or more new nodes have the potential to attempt to simultaneously enter into the corresponding wireless network. Therefore, there is a possibility that a plurality of new nodes will send signals simultaneously. Upon reception in a wireless space, the control node cannot draw a distinction between signals when a plurality of nodes transmits signals simultaneously, whereby there is a high probability that they will be unable to receive any signals properly, thus causing a failure in communication. Since each node waits for the permission of sending by the node ID for the purpose of temporary utilization again when the failure in communication occurs, the operation that the same plural nodes transmit signals again at the next opportunities and thereby fail to communicate, is repeated, so that they cannot quit from this state. Thus, when each node transmits a signal by using the node ID for the purpose of temporary utilization and fails to communicate, limitations are imposed on sending or outgoing in consideration of the following two contents.

The first is priorities pre-set to each individual WN nodes. As in the case of a remote controller, etc. for example, high priorities are set to WN nodes connected to nodes each requiring a short transfer time in spite of an unexpected process so that they can ensure nodes ID earlier. The second is random numbers. Since the WN nodes having the same priorities cannot solve the problems when they are entered into the above conditions in the case of the above-described first method alone, they are caused to have items of the random numbers thereby to reduce the possibility of simultaneous sending.

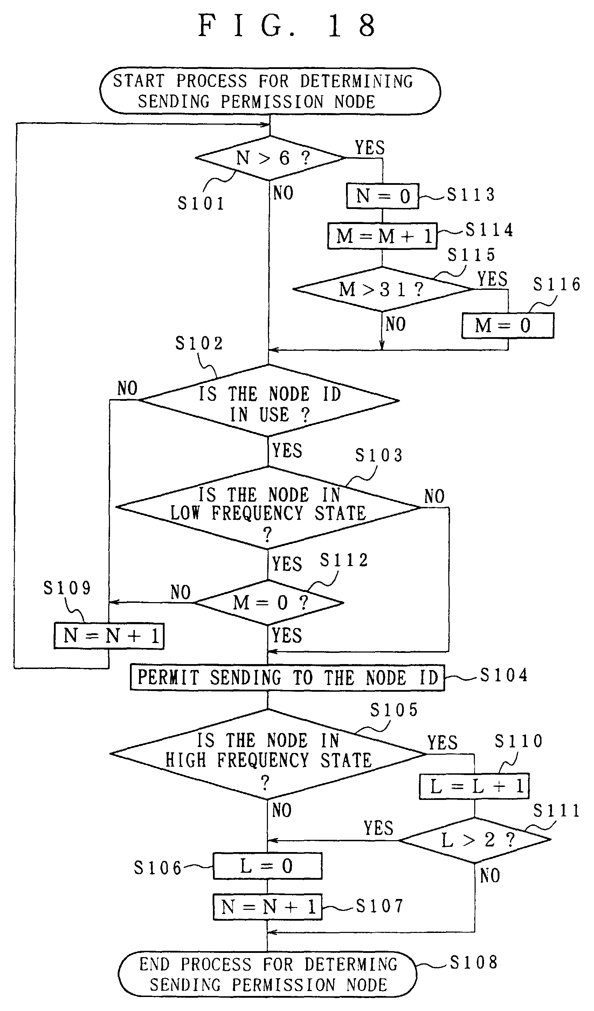

The sending permission to the respective WN nodes 100 is limited according to the frequency of sending permission to the respective nodes adjusted by the above-described process (see Fig. 17) for adjusting the frequency of sending permission. Fig. 18 shows one example of a control operation of WN node 100 used as a control node, for determining a node which permits sending in a given time slot.

The example shown in Fig. 18 illustrates a case in which a wireless network is constructed by seven WN nodes 100 at maximum inclusive of a control node. When, in this case, the frequency of sending permission to a certain WN node 100 is set to normal frequency, a decision as to sending permission with respect to one time slot is made to the WN node 100 within one cycle used for a sending permission process. Here, a process for determining whether the sending permission should be given to all the WN nodes 100 in order is performed during one cycle for the sending permission process.

On the other hand, when the frequency of sending permission to the certain WN node 100 is set to high frequency, a decision as to sending permission with respect to continuous three time slots is made to the WN node 100 within one cycle for the sending permission process. Further, when the frequency of sending permission to the certain WN node 100 is set to low frequency, a decision as to sending permission with respect to one time slot is made to the WN node 100 within 32 cycles for the sending permission process.

It is first determined in Step S101 whether a count N of an ID counter is greater than 6. In this case, 0 through 6 each represented as the count N correspond to 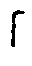 001 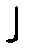 through 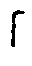 111 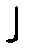 of nodes ID, respectively. When the count N is found not to be N > 6, this means that the control operation is in course of one cycle for the sending permission process, and the operation goes to Step S102 where a decision is made as to whether a node ID corresponding to the count N is in use. When the node ID is found to be not in use, the operation goes to Step 109 where the count N of the ID counter is incremented, followed by return to Step S101. On the other hand, when the node ID is found to be in use, it is determined in Step S103 whether the frequency of sending permission to a WN node having the node ID is set to low frequency.

When the frequency of sending permission is not set to the low frequency, the operation goes to Step S104. On the other hand, when the frequency of sending permission is set to the low frequency, the operation goes to Step S112 where it is determined whether a count M of a low-frequency counter is 0. If the count M is found not to be M = 0, the operation goes to Step 109 where the count N of the ID counter is incremented, followed by return to Step S101. On the other hand, when M = 0, the operation goes to Step S104. In Step S104, the permission of sending by a node ID corresponding to the count N of the ID counter is decided so as to be made to one time slot for the corresponding process.

It is determined in Step S105 whether the frequency of sending permission to a WN node 100 having the node ID referred to above is set to high frequency. When the answer is found not to be high frequency, the operation goes to Step S106 where a count L of a high-frequency counter is set to 0. In Step S107, the count of the ID counter is incremented. Thereafter, the operation goes to Step S108 where the process for determining each sending-permitted node with respect to one time slot terminates.

On the other hand, when it is determined in Step S105 that the frequency of sending permission is set to the high frequency, the operation goes to Step S110 where the count L of the high-frequency counter is incremented, followed by proceeding to Step S111. It is determined in Step S111 whether the count L is greater than 2. If the count L is found not to be L > 2, then the operation goes to Step 108 where the process for determining the sending-permitted node terminates. On the other hand, when L > 2, the operation goes to Step S106 where the count L of the high-frequency counter is set to 0. In Step S107, the count of the ID counter is incremented. Thereafter, the operation goes to Step S108 where the process for deciding the sending-permitted node with respect to one time slot terminates.

When N > 6 in Step S101, this means that one cycle for the sending permission process has been finished. Therefore, the operation goes to Step S113 where the count N of the ID counter is set to 0. In Step S114, the count M of the low-frequency counter is incremented. It is determined in Step S115 whether the count M is greater than 31. If the count M is found not to be M > 31, this means that the operation is in course of 32 cycles for the sending permission process, and the operation goes to Step S102 where operation similar to the above operation is performed. On the other hand, when M > 31, this means that the above 32 cycles have been finished, and the count M is set to 0. Thereafter, the operation goes to Steps S102.

When the WN node 100 having the node ID corresponding to the count N of the ID counter is in use and the frequency of its sending permission is set to the normal frequency upon the control operation shown in Fig. 18, the control operation routine goes from Step S102 to Step S104 through Step S103, where the permission of sending by the above-described node ID is decided so as to be made to one time slot for the corresponding process. Further, the operation goes to Step S107 through Step S106, where the count N is incremented and thereafter the corresponding process terminates. Thus, a decision as to the sending permission is inevitably made to the WN node 100 whose frequency of sending permission is set to the normal frequency upon the control operation shown in Fig. 18. Accordingly, the decision as to the sending permission with respect to one time slot is made to the WN node 100 within one cycle for the sending permission process.

Next, when the WN node 100 having the node ID corresponding to the count N of the ID counter is in use and the frequency of its sending permission is set to the high frequency, the operation goes from Step S102 to Step 104 through Step S103, where the permission of sending by the above-described node ID is decided so as to be made to one time slot for the corresponding process. In Step S110, the count L of the high-frequency counter is incremented. When the count L is not greater than 2, the count N of the ID counter is not incremented and the corresponding process terminates.

Therefore, the operation shown in Fig. 18 is continuously performed three times with respect to the WN node 100 whose frequency of sending permission is set to the high frequency, with the node ID of the corresponding WN node 100 as an object, thereby to make a decision as to the sending permission to continuous three time slots. Accordingly, the decision as to the sending permission with respect to the continuous three time slots is made to the WN node 100 within one cycle for the sending permission process.

Next, when the WN node 100 having the node ID corresponding to the count N of the ID counter is in use and the frequency of its sending permission is set to the low frequency, the operation goes from Step S102 to Step S112 through Step S103. Only when the count M of the low-frequency counter is 0, the operation goes to Step S104 where the permission of sending by the above-described node ID is decided so as to be made to one time slot for the corresponding process. Further, the operation goes to Step S107 through Step S106, where the count N is incremented and the processing terminates.

Since the count M of the low-frequency counter is set to 0 every time 32 cycles for the sending permission process are completed (Steps S115 and S116), a decision as to the sending permission is made to the WN node 100 whose frequency of sending permission is set to the low frequency, only in the first cycle of the 32 cycles for the sending permission process. Thus, when the frequency of sending permission to the WN node 100 is set to the low frequency, a decision as to the sending permission with respect to one time slot is made to the WN node 100 within the 32 cycles for the sending permission process.

In the present embodiment described above, a WN node 100 used as a control node sends a control block (see Fig. 8) in each cycle of 125 µsec. Further, a WN node 100 used as a controlled node performs a process for reproducing a transfer clock signal at the control node from the control block and synchronizing its own transfer clock signal with the reproduced transfer clock signal at the control node. Thus, the transfer clock signal at the controlled node is synchronized with the transfer clock signal at the control node.

Further, the sending or outgoing of each node (corresponding to control node and controlled node) is permitted according to a slot permission area of the control block sent from the WN node 100 used as the control node, and a fixed-length data block is transferred between each individual nodes through the use of a predetermined time slot of time slots 1 through 6 provided within continuous respective cycles.

Thus, the synchronization of the transfer clock signal for the controlled node with the transfer clock signal for the control node is assured. Therefore, the respective nodes eliminate the need for the clock signal synchronizing process even if each sending or outgoing node is switched to another. Further, a synchronous delay time developed incident to the switching between the outgoing nodes can be greatly shortened and the instantaneity of the switching between the sending nodes can be ensured, thereby making it possible to bring an isochronous transfer of a high-speed serial bus into wireless form.

Each node transfers a fixed-length data block in a time slot at which its sending is permitted by the corresponding control node. Therefore, a transfer width of data sent from each node is managed with the fixed-length data block as a unit. Thus, even if one node is transferring continuous data, the sending permission is switched to another node, thus making it easy to provide the transfer width of the data for the node.

Since the transfer width of the data sent from each node is managed with the fixed-length data block as the unit, the switching between the sending nodes is done only between the time slots. Thus, the management of the transfer width at each node by the control node and the process for performing switching between the sending nodes are simplified.

Since the fixed-length data block is transferred, a relatively simple and strong error-correction code such as Reed-Solomon code or the like can be used as an error-correcting code for the data block. Further, since a parity adding unit is fixed to the data block, parity-adding and error-correcting processes can be simplified to one length-fixed type. Since the amount of a delay developed due to the addition of the parity and the error correction is fixed, control on the transfer time can be also simplified.

In the present embodiment as well, the use flags indicative of the conditions of use of the plurality of nodes ID (node identifiers) are held in the first storage area (see Fig. 14) of the RAM 104 of the WN node 100 used as the control node. For example, a WN node 100 used as a controlled node that attempts to enter into a wireless network, makes a request to a control node for changing of a use flag indicative of the condition of use of non-used node ID to a used state. In response to it, the control node sets the use flag indicative of the condition of use of the node ID so as to indicate the used state. Thus, the corresponding controlled node can enter the above node ID into the wireless network as its own node ID.

For example, a controlled node which attempts to separate from the wireless network, makes a request to its corresponding control node for changing of a use flag indicative of the condition of use of its own node ID to a non-used state. In response to it, the control node changes the use flag indicative of the condition of use of the node ID to the non-used state. Thus, the corresponding controlled node releases its own node ID and hence can be separated from the wireless network.

Thus, the WN node 100 used as the control node changes the use flags indicative of the conditions of use of the plurality of nodes ID, which are held in the first storage area of the RAM 104, according to the request issued from the WN node 100 used as each controlled node, whereby the corresponding controlled node enters into and separates from the wireless network and the settings of the network can be changed while the respective nodes are in commission. Further, controlled node enters into the wireless network with its own node ID, and the control node can easily perform sending control on each node through the use of its corresponding node ID.

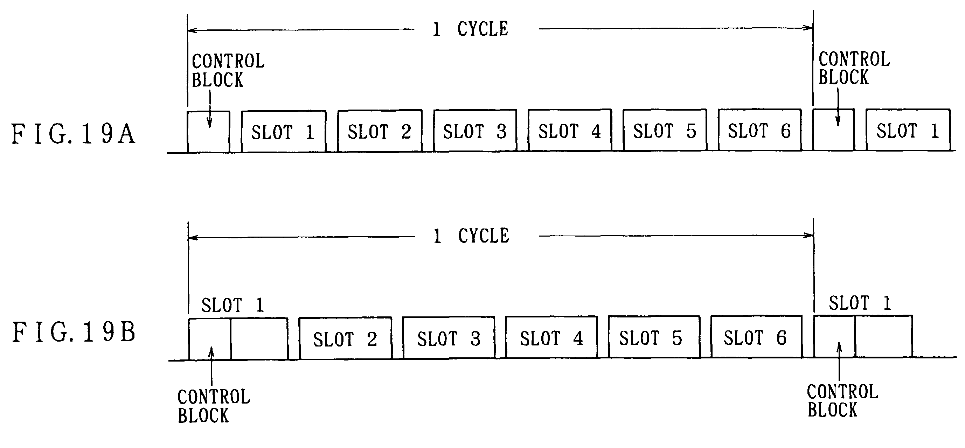

In the aforementioned embodiment, a control block has been sent within each cycle of 125 µsec and antecedent to time slots 1 through 6 as show in Fig. 19A. However, as shown in Fig. 19B, the leading time slot 1 is defined as a dedicated time slot sent by a control node and a control block may be sent within this time slot 1. Owing to such a construction, an advantage is brought about in that the type of error-correcting code may not be set to another one between the control block and the data block as in the aforementioned embodiment. However, the time slot 1 should be assuredly used for the sending or outgoing of the control node.

In the aforementioned embodiment as well, the present invention is applied to the wireless network for transferring the packet data such as the isochronous packet, the asynchronous packet, etc. based on the IEEE1394. However, the present invention can be similarly applied even to a wireless network for transferring data on other high-speed serial buses such as a USB, etc.

Further, in the aforementioned embodiment, the present invention is applied to the wireless network using the infrared rays as the radio communication medium. However, the present invention can be similarly applied even to a wireless network using other radio communication mediums such as radio waves, laser light, etc.

### INDUSTRIAL APPLICABILITY

As described above, the radio communication method and radio communication apparatus according to the present invention are suitable for application to the transfer of data between respective nodes in a wireless network using infrared rays, radio waves, etc. as radio communication mediums.

## Claims

1. A radio communication method for performing communications within a wireless network comprised of one control node and one or more controlled nodes to be controlled by said one control node, comprising the following steps:
a clock synchronizing step for synchronizing a transfer clock signal of said controlled node with a transfer clock signal of said control node by using a transfer clock synchronizing signal sent from said control node; and
a sending control step for allowing said control node to control the sending of said each node so that a fixed-length data block is transferred between said respective nodes through the use of a predetermined time slot of a plurality of time slots respectively provided within continuous respective cycles.

2. The radio communication method according to claim 1, further comprising a control block sending step for transmitting a control block from said control node within said continuous each cycle.

3. The radio communication method according to claim 2, wherein said control block is sent within said continuous each cycle and antecedent to said plurality of time slots.

4. The radio communication method according to claim 2, wherein said control block is sent within said continuous each cycle and using the leading time slot of said plurality of time slots.

5. The radio communication method according to claim 2, wherein said control block includes identification information indicative of a node which permit sending based on each individuals of said plurality of time slots.

6. The radio communication method according to claim 2, wherein said control block includes said transfer clock synchronizing signal used in said clock synchronizing step.

7. The radio communication method according to claim 1, wherein in said sending control step, said control node determines a node which permits sending based on each of said plurality of time slots according to data transfer information of said each node.

8. The radio communication method according to claim 1, further including a creating step for allowing said each node to create said transfer block from one or a plurality of packets each having a predetermined length, and wherein in said control step, said control node determines node which permits sending based on each of said plurality of time slots according to priority items of said packets.

9. The radio communication method according to claim 2, wherein said control block includes time information of said control node, and further including a correcting step for allowing said controlled node to correct time through the use of said time information.

10. The radio communication method according to claim 2, wherein said control block includes the transfer clock synchronizing signal used in said clock synchronizing step, the identification information indicative of a node which permits sending based on each of said plurality of time slots, and the time information of said control node.

11. The radio communication method according to claim 10, wherein said control block includes error-correcting codes with respect to at least identification information indicative of a node which permits sending based on each of said plurality of time slots and the time information of said control node.

12. The radio communication method according to claim 1, further comprising a creating step for allowing said each node to create the fixed-length data block by using data about one or a plurality of packets each having a predetermined length.

13. The radio communication method according to claim 12, wherein in said creating step, said each node compiles data about a plurality of packets, which are padded with unavailable data, into one or divides data about one packet into plural form thereby to create the fixed-length data block.

14. The radio communication method according to claim 13, wherein identification information for identifying the original packet is added to the data about the respective packets constituting said data block.

15. The radio communication method according to claim 14, further including a reconstructing step for reconstructing the original packet from the data block received by said each node, using the identification information.

16. The radio communication method according to claim 1, wherein a radio wave is used as a radio communication medium.

17. The radio communication method according to claim 1, wherein infrared radiation is used as the radio communication medium.

18. A radio communication apparatus comprising:
one control node; and
one or more controlled nodes controlled by said control node, said apparatus performing communications between said respective nodes by radio,
wherein said control node includes:
synchronizing signal sending means for transmitting a transfer clock synchronizing signal;
data sending means for sending data with a fixed-length data block as a unit;
data receiving means for receiving the data block; and
sending control means for controlling sending of said each node so that the data block is transferred between said respective nodes through the use of a predetermined time slot of a plurality of time slots respectively provided within continuous each cycle, and wherein said controlled node including:
synchronizing signal receiving means for receiving the transfer clock synchronizing signal;
transfer clock synchronizing means for synchronizing a transfer clock signal with a transfer clock signal of said control node through the use of the transfer clock synchronizing signal;
data sending means for transmitting data with the fixed-length data block as the unit; and
data receiving means for receiving the data block.

19. The radio communication apparatus according to claim 18, wherein said control node further includes control block sending means for transmitting a control block within said continuous each cycle.

20. The radio communication apparatus according to claim 19, wherein said control block is sent within said continuous each cycle and antecedent to said plurality of time slots.

21. The radio communication apparatus according to claim 19, wherein said control block is sent within said continuous each cycle and using the leading time slot of said plurality of time slots.

22. The radio communication apparatus according to claim 19, wherein said control block includes identification information indicative of nodes which permit sending based on each individuals of said plurality of time slots.

23. The radio communication apparatus according to claim 19, wherein said control block includes said transfer clock synchronizing signal.

24. The radio communication apparatus according to claim 18, wherein said sending control means of said control node determines a node which permits sending based on each of said plurality of time slots according to data transfer information of said each node.

25. The radio communication apparatus according to claim 18, wherein said each node further includes data block creating means for creating the data block from one or a plurality of packets each having a predetermined length, and
said reception control means of said control node determines a node which permits sending based on each of said plurality of time slots according to priority items of said plural packets.

26. The radio communication apparatus according to claim 19, wherein said control block includes time information, and
said each controlled node further includes time correcting means for correcting a time interval generated from a time generator, using the time information.

27. The radio communication apparatus according to claim 19, wherein said control block includes the transfer clock synchronizing signal used in said clock synchronizing step, the identification information indicative of a node which permits sending based on each of said plurality of time slots and the time information of said control node.

28. The radio communication apparatus according to claim 27, wherein said control block includes error-correcting codes with respect to at least identification information indicative of a node which permits sending based on each of said plurality of time slots and the time information of said control node.

29. The radio communication apparatus according to claim 18, wherein said each node further includes transfer block creating means for creating the fixed-length transfer block from said one or plural packets each having the predetermined length.

30. The radio communication apparatus according to claim 29, wherein said data block creating means compiles data about a plurality of packets, which are padded with available data, into one or divides data about one packet into plural form thereby to create the fixed-length data block.

31. The radio communication apparatus according to claim 30, wherein said data block creating means adds identification information for identifying the original packet to the data about the respective packets constituting said data block.

32. The radio communication apparatus according to claim 31, wherein said each node further includes data restoring means for reconstructing the original packet from said received data block by using the identification information.

33. The radio communication apparatus according to claim 18, wherein a radio wave is used as a radio communication medium.

34. The radio communication apparatus according to claim 18, wherein infrared radiation is used as the radio communication medium.

35. A radio communication method for performing communications within a wireless network comprised of one control node and one or more controlled nodes controlled by said control node, comprising the following steps:
a change requiring step for allowing said controlled node to make a request to said control node for changing of data indicative of the condition of use of a predetermined node identifier, based on data indicative of the conditions of use of a plurality of node identifiers held in a storage unit of said control node; and
a data changing step for allowing said control node to change the data indicative of the condition of use of said predetermined node identifier held in said storage unit according to said data change request issued from said each controlled node.

36. The radio communication method according to claim 35, wherein said controlled node enters into said wireless network, and
wherein in said change requiring step, said controlled node refers to the data indicative of the conditions of use of said plurality of node identifiers thereby to determine a node identifier to be used by itself from non-used node identifiers, and requests a change in data indicative of the condition of use of the determined node identifier.

37. The radio communication method according to claim 35, wherein said controlled node is separated from said wireless network, and
wherein in said change requiring step, said controlled node refers to the data indicative of the conditions of use of said plurality of node identifiers thereby to confirm that its own node identifier is placed under service conditions, and requests a change in data indicative of the condition of use of its own node identifier.

38. The radio communication method according to claim 35, further including a control step for controlling sending of said each node by said control node, and
wherein controlled node having no its own identifier communicates with said control node through the use of a node identifier used for the purpose of temporary utilization, which is different from said plurality of node identifiers, during a predetermined period in which sending thereof is permitted by said control node.

39. The radio communication method according to claim 38, further including a transfer step for transferring data between said respective nodes with a plurality of time slots respectively provided within continuous each cycle as a unit, and
wherein said control node sets any of said time slots as said predetermined period in said control step.

40. The radio communication method according to claim 39, wherein in said control step, said control node sends a control block including information indicative of said predetermined period within said continuous each cycle.

41. The radio communication method according to claim 35, further including:
a control step for controlling sending of said each node by said control node, and
a releasing step for allowing said control node to change data indicative of the condition of use of the node identifier of said controlled node, said data being held in said storage unit, to a non-used state when non-sending of said controlled node whose sending is permitted by said control node, occurs continuously a predetermined number of times.

42. The radio communication method according to claim 41, further including a transfer step for transferring data between said respective nodes through the use of a plurality of time slots respectively provided within continuous each cycle with a fixed-length transfer block as a unit, and
wherein in said control step, said control node sends a control block including identification information indicative of a node which permits sending based on each of said plurality of time slots, within said continuous each cycle.

43. The radio communication method according to claim 35, wherein a radio wave is used as a radio communication medium.

44. The radio communication method according to claim 35, wherein infrared radiation is used as a radio communication medium.

45. A radio communication method for performing communications within a wireless network comprised of one control node and one or more controlled nodes controlled by said control node, said control node including a control step for controlling sending of said each node based on data indicative of the frequency of sending permission to said each node held in a storage unit.

46. The radio communication method according to claim 45, further including a transfer step for transferring data between said respective nodes through the use of a plurality of time slots respectively provided within continuous each cycle with a fixed-length transfer block as a unit, and
wherein in said control step, said control node sends a control block including identification information indicative of a node which permits sending based on each of said plurality of time slots, within said continuous each cycle.

47. The radio communication method according to claim 45, wherein said control node further includes a data changing step for changing the data indicative of the frequency of sending permission to said each node, said data being held in said storage unit.

48. The radio communication method according to claim 47, wherein in said data changing step, when non-sending of controlled node whose sending is permitted, occurs continuously a predetermined number of times during a predetermined period in which the sending is allowed, said control node changes the data indicative of the frequency of sending permission to said controlled node, said data being held in said storage unit, so that the frequency thereof is low.

49. The radio communication method according to claim 47, further including:
a change request sending step for allowing said controlled node to send a request for a change in data indicative of the frequency of sending permission, and
a change request receiving step for receiving the request for the change in said frequency of sending permission by said control node, and
wherein in said data changing step, said control node changes the data indicative of the frequency of sending permission to said controlled node, said data being held in said storage unit, according to the request for the change in said frequency of sending permission.

50. The radio communication method according to claim 49, wherein in said change request sending step, when said controlled node is expected to be continuously placed in a transmit data-free state, said controlled node sends a request for changing the data indicative of the frequency of sending permission to said controlled node, said data being held in said storage unit of said control node, so that the frequency thereof becomes low.

51. The radio communication method according to claim 49, wherein in said change request sending step, when said each controlled node is expected to transmit transmitting data continuously, said controlled node sends a request for changing the data indicative of the frequency of sending permission to said controlled node, said data being held in the storage unit of said control node, so that the frequency thereof becomes high.

52. The radio communication method according to claim 47, wherein in said data changing step, said control node changes the data indicative of the frequency of sending permission to said each node, said data being held in the storage unit, according to data transfer information of said each node.

53. The radio communication method according to claim 47, further including:
a transfer step for transferring data between said respective nodes with a fixed-length transfer block as a unit, and
a creating step for allowing said each node to create the transfer block from one or a plurality of packets each having a predetermined length, and
wherein in said data changing step, said control node changes the data indicative of the frequency of sending permission to said each node, said data being held in the storage unit, according to priority items of said packet.

54. The radio communication method according to claim 45, wherein a radio wave is used as a radio communication medium.

55. The radio communication method according to claim 45, wherein infrared radiation is used as the radio communication medium.

56. A radio communication apparatus comprising:
one control node; and
one or more controlled nodes controlled by said control node, said apparatus performing communications between said respective nodes by radio,
wherein said control node includes:
a storage unit for holding data indicative of the conditions of use of a plurality of node identifiers; and
data changing means for changing data indicative of the condition of use of a predetermined node identifier, said data being held in said storage unit, according to a request issued from said controlled node, and wherein said controlled node includes:
change requiring means for making a request to said control node for a change in the data indicative of the condition of use of the predetermined node identifier, based on the data indicative of the conditions of use of said plurality of node identifiers, said data being held in the storage unit of said control node.

57. The radio communication apparatus according to claim 56, wherein said each controlled node enters into said wireless network, and
wherein said change requiring means of said controlled node refers to the data indicative of the conditions of use of said plurality of node identifiers thereby to determine node identifier to be used by itself from non-used node identifiers, and requests a change in data indicative of the condition of use of the determined node identifier.

58. The radio communication apparatus according to claim 56, wherein said each controlled node is separated from said wireless network, and
wherein said change requiring means of said controlled node refers to the data indicative of the conditions of use of said plurality of node identifiers thereby to confirm that its own node identifier is in a used state, and requests a change in data indicative of the condition of use of its own node identifier.

59. The radio communication apparatus according to claim 56, wherein said each node further includes data sending means for transmitting data,
wherein said control node further includes sending control means for controlling sending of said each node, and
wherein controlled node having no its own identifier communicates with said control node through the use of a node identifier used for the purpose of temporary utilization, which is different from said plurality of node identifiers, during a predetermined period in which sending thereof is permitted by said control node.

60. The radio communication apparatus according to claim 59, wherein said data sending means of said each node sends data through the use of a plurality of time slots respectively provided within continuous each cycle, and
wherein said sending control means of said control node sets any of said time slots as said predetermined period.

61. The radio communication apparatus according to claim 60, wherein said sending control means of said control node sends a control block including information indicative of said predetermined period within said continuous each cycle.

62. The radio communication apparatus according to claim 56, wherein said control node further includes sending control means for controlling sending of said each node, and node identifier releasing means for changing data indicative of the condition of use of the node identifier of said controlled node, said data being held in said storage unit, to a non-used state when non-sending of said controlled node whose sending is permitted by said sending control means, occurs continuously a predetermined number of times.

63. The radio communication apparatus according to claim 62, wherein said each node further includes data sending means for sending data through the use of a plurality of time slots respectively provided within continuous each cycle with a fixed-length transfer block as a unit, and
wherein said sending control means of said control node sends a control block including identification information indicative of a node which permits sending based on each of said plurality of time slots, within said continuous each cycle.

64. The radio communication apparatus according to claim 56, wherein a radio wave is used as a radio communication medium.

65. The radio communication apparatus according to claim 56, wherein infrared radiation is used as the radio communication medium.

66. A radio communication apparatus comprising:
one control node; and
one or more controlled nodes controlled by said control node, said apparatus performing communications between said respective nodes by radio,
wherein said control node includes:
a storage unit for holding data indicative of the frequency of sending permission to said each node; and
sending control means for controlling sending of said each node based on the data indicative of the frequency of sending permission to said each node, said data being held in said storage unit.

67. The radio communication apparatus according to claim 66, wherein said each node further includes data sending means for sending data through the use of a plurality of time slots respectively provided within continuous each cycle with a fixed-length transfer block as a unit, and
wherein said sending control means of said control node sends a control block including identification information indicative of a node which permits sending based on each of said plurality of time slots, within said continuous each cycle.

68. The radio communication apparatus according to claim 66, wherein said control node further includes data changing means for changing the data indicative of the frequency of sending permission to said each node, said data being held in said storage unit.

69. The radio communication apparatus according to claim 68, wherein when non-sending of controlled node whose sending is permitted by said sending control means, occurs continuously a predetermined number of times during a predetermined period in which the sending is allowed, said data changing means of said control node changes the data indicative of the frequency of sending permission to said controlled node, said data being held in said storage unit, so that the frequency thereof becomes low.

70. The radio communication apparatus according to claim 68, wherein said controlled node further includes change request sending means for sending a request for a change in data indicative of the frequency of sending permission,
wherein said control node further includes change request receiving means for receiving the request for the change in the data indicative of said frequency of sending permission, and
wherein said data changing means of said control node changes the data indicative of the frequency of sending permission to said each controlled node, said data being held in said storage unit, according to the request for the change in said frequency of sending permission, said request being received by said change request receiving means.

71. The radio communication apparatus according to claim 70, wherein when said controlled node is expected to be continuously placed in a transmit data-free state, said change request sending means of said controlled node sends a request for changing the frequency of sending permission to said control node or the data indicative of the frequency of sending permission, said data being held in said storage unit of said control node, so that the frequency thereof becomes low.

72. The radio communication apparatus according to claim 70, wherein when said controlled node is expected to transmit transmitting data continuously, said change request sending means of said controlled node sends a request for changing the data indicative of the frequency of sending permission to said each controlled node, said data being held in the storage unit of said control node, so that the frequency thereof becomes high.

73. The radio communication apparatus according to claim 68, wherein said data changing means of said control node changes the data indicative of the frequency of sending permission to said each node, said data being held in the storage unit, according to data transfer information of said each node.

74. The radio communication apparatus according to claim 68, wherein said each node further includes data sending means for sending data with a fixed-length transfer block as a unit, and transfer block creating means for creating the fixed-length transfer block from one or a plurality of packets each having a predetermined length, and
wherein said data changing means of said control node changes the data indicative of the frequency of sending permission to said each node, said data being held in the storage unit of said control node, according to priority items of said packet.

75. The radio communication apparatus according to claim 66, wherein a radio wave is used as a radio communication medium.

76. The radio communication apparatus according to claim 66, wherein infrared radiation is used as the radio communication medium.
